(19) Europäisches Patentamt / European Patent Office / Office européen des brevets

(11) **EP 4 151 517 A1**

(12) **EUROPEAN PATENT APPLICATION**
published in accordance with Art. 153(4) EPC

(43) Date of publication:
**22.03.2023 Bulletin 2023/12**

(21) Application number: **21804324.8**

(22) Date of filing: **14.05.2021**

(51) International Patent Classification (IPC):
**B63H 25/04** (2006.01)

(52) Cooperative Patent Classification (CPC):
**B63H 25/04; G05D 1/02**

(86) International application number:
**PCT/JP2021/018445**

(87) International publication number:
**WO 2021/230356 (18.11.2021 Gazette 2021/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.05.2020 JP 2020086108**

(71) Applicant: **National Institute of Maritime, Port and Aviation Technology**
**Mitaka-shi, Tokyo 181-0004 (JP)**

(72) Inventor: **SAWADA Ryohei**
**Mitaka-shi, Tokyo 181-0004 (JP)**

(74) Representative: **Körfer, Thomas**
**Mitscherlich PartmbB**
**Patent- und Rechtsanwälte**
**Sonnenstrasse 33**
**80331 München (DE)**

(54) **METHOD FOR AUTONOMOUSLY GUIDING VESSEL, PROGRAM FOR AUTONOMOUSLY GUIDING VESSEL, SYSTEM FOR AUTONOMOUSLY GUIDING VESSEL, AND VESSEL**

(57)    The present invention provides an automatic guiding method of a vessel capable of controlling a deviation from the scheduled route/course to a value less than a constant value even if there is disturbance without necessitating a great amount of calculations, an automatic guiding program of a vessel, an automatic guiding system of a vessel and a vessel. An automatic guiding method of a vessel using an automatic sailing device which at least automatically steers of the vessel underway includes a scheduled route/course producing process S1 for acquiring or calculating the scheduled route/course, the vessel information acquiring process S3 for acquiring a position of the vessel and a heading, a pure pursuit calculation process S4 for calculating a target point or an orientation of the target point which satisfies a predetermined condition on the scheduled route/course in an ongoing direction of the vessel based on the position and a heading, an automatic sailing calculation process S5 for calculating a steering/rudder angle of the vessel based on the target point or the orientation and the position or the heading, and controlling process S6 for controlling the automatic sailing device based on the calculated steering/rudder angle.

Fig.2

Start control
S1
Input scheduled route
S2
Start sailing
S3
Acquire vessel information
S4
Pure pursuit calculate
S5
Automatic sailing Sail calculate
S6
Steering
S7
Is control termination signal received ? — NO
YES
Terminal control

**Description**

[TECHNICAL FIELD]

The present invention relates to an automatic guiding method of a vessel using an automatic sailing device which at least automatically steers of a vessel underway, an automatic guiding program of a vessel, an automatic guiding system of a vessel and a vessel.

[BACKGROUND TECHNIQUE]

Berthing operation is one of the most burdensome tasks for seafarers among steering operations of a vessel, and high ship-steering technique is required in a low speed state. Normally, in the case of a vessel when it is navigated at low speed, ship-steering property is deteriorated due to reduction of vertical rudder pressure, and since the vessel easily receives disturbance such as wind and tidal stream, high technique is generally required for the berthing operation. In recent years, on the other hand, shortage of skilled seafarers and aging of seafarers grow into serious problems in coastal shipping.

Here, patent document 1 discloses an automatic steering device including a course calculating section which calculates a course of a vessel based on positions of a plurality of objective points, an indirect objective point calculating section which calculates a forward indirect objective point of the vessel, a commanded rudder angle calculating section which calculates a commanded rudder angle based on a positional relation between a turning course and the indirect objective point, and a steering control section which controls a steering mechanism of the vessel based in the commanded rudder angle.

Patent document 2 discloses an automatic steering method for changing (course changing) from a current course to a new course by turning a vessel by a constant turn rate, wherein a course changing point is determined on the current course by the turn rate and a vessel speed, a course changing line which passes through this course changing point and which is parallel to the new course is determined, and if the own vessel passes through this course changing line, course changing based on the turn rate is started, and when it is determined that course changing can be carried out more precisely by changing the current control to a course keep control which corrects a pathway orientation based on a course deviation amount from the course than course changing based on this turn rate, the course changing based on the turn rate is switched to the course keep control.

Patent document 3 discloses a sailing system in which a course based on predetermined positional information and a sailing operation concerning a change of the engine rotation number and a direction of a rudder on the course are previously recorded in a controller, and a vessel is automatically sailed based on the recorded course and the sailing operation.

Patent document 4 discloses an automatic steering device of a vessel in which if a ship operator switches a steering operation to an automatic steering operation by a display section of the automatic steering device, a control section of the automatic steering device acquires a heading and a position of the vessel at that time, a set course and a set orientation are calculated and thereafter, the heading and a position of the vessel at respective time are always acquired, an orientation deviation between the set course and the set orientation is calculated, and a rudder angle for controlling the rudder is calculated based on the difference.

[PRIOR ART DOCUMENTS]

[PATENT DOCUMENTS]

[Patent Document 1] Japanese Patent Application Laid-open No.2019-196103
[Patent Document 2] Japanese Patent Application Laid-open No.H7-242199
[Patent Document 3] Japanese Patent Application Laid-open No.2014-184846
[Patent Document 4] Japanese Patent Application Laid-open No.2011-16384

[SUMMARY OF THE INVENTION]

[PROBLEM TO BE SOLVED BY THE INVENTION]

Concerning automatization of the berthing operation, many studies using optimal control theory, neural network and a PD controller, and evolutionary computation are made. On the other hand, to solve various problems such as difficulty level of design system, real time performance of control calculation, cost and safety, it is required to develop a simpler controller which can be applied also to a general vessel composed of a rudder and a propeller.

Here, according to the patent document 1, it is necessary to calculate a curved course along which the own vessel passes through when the course is changed, and to calculate the commanded rudder angle based on the positional relation with respect to an indirect objective point, and calculation becomes complicated.

The patent document 2 attempts to enhance the precision when a course is changed from a current course to a new course, it does not precisely follow a scheduled course on the current course or the new course.

In the patent document 3, it is described that while the vessel automatically sails based on a set course, a sailing state of a vessel is detected by a rudder angle sensor, a throttle sensor, a GPS device and a heading sensor, and performing feedback control, but it is not detail described at all in the patent document 3 how feedback control is performed based on the detected sailing status.

The patent document 4, control is automatically performed to sail a vessel on a set course based on a deviation between a pair of own vessel's heading and position and a pair of set heading and set course, and calculation becomes complicated.

Hence, it is an object of the present invention to provide an automatic guiding method of a vessel capable of controlling a deviation from the scheduled route/course to a value less than a constant value even if there is disturbance without necessitating a great amount of calculations, an automatic guiding program of a vessel, an automatic guiding system of a vessel and a vessel.

[MEANS FOR SOLVING THE PROBLEM]

An automatic guiding method of a vessel corresponding to claim 1, an automatic guiding method of a vessel using an automatic sailing device which at least automatically steers of the vessel underway, including: a scheduled route/course producing process for acquiring or calculating a scheduled route/course; a vessel information acquiring process for acquire a position of the vessel and a heading; a pure pursuit calculation process for calculating a target point or an orientation of the target point which satisfies a predetermined condition on the scheduled route/course in an ongoing direction of the vessel based on the position and a heading; an automatic sailing calculation process for calculating a steering/rudder angle of the vessel based on the target point or the orientation and the position or the heading; and a controlling process for controlling the automatic sailing device based on the calculated steering/rudder angle.

According to the present invention described in claim 1, control (pure pursuit control) based on calculation of pure pursuit and the automatic sailing device are combined, the automatic guiding to follow the scheduled route/course is carried out, thereby performing control without necessitating a great amount of calculations, and even if there is disturbance, a deviation from the scheduled route/course can be suppressed to a constant value or less. Especially, by combining with the automatic sailing device such as autopilot, it becomes easy to follow a route in which the scheduled route/course has a curved portion by pure pursuit control.

In the invention described in claim 2, a speed of the vessel is acquired in the vessel information acquiring process, and calculation is carried out using the speed in the pure pursuit calculation process and the automatic sailing calculation process.

According to the present invention described in claim 2, the vessel can more precisely follow the scheduled route/course in accordance with the speed.

In the invention described in claim 3, an input arrival position of the vessel of an arrival point and an arrival orientation are acquired in the scheduled route/course producing process, and the scheduled route/course capable of reaching the arrival position and securing the arrival orientation is calculated using the position, the heading and the speed acquired by the vessel information acquiring process.

According to the present invention described in claim 3, it is possible to produce a scheduled route/course formed from a smooth curved path connected to an arrival position with a direction (angle) of the arrival orientation.

In the invention described in claim 4, in the scheduled route/course producing process, sea area information is acquired, and the sea area information where the vessel cannot sail is added and the scheduled route/course is calculated.

According to the present invention described in claim 4, it is possible to enhance the safety of the automatic guiding method of a vessel, and to widen an sea area to which the automatic guiding method of a vessel can be applied.

Here, "the sea area information where the vessel cannot sail" is information concerning the sea area where an obstacle such as moving object and floating object like vessel or shallow waters exist and a vessel cannot sail.

In the invention described in claim 5, in the scheduled route/course producing process, further includes a control point adjusting process for adjusting a control point which is set for changing the scheduled route/course formed from a curved path, and the scheduled route/course is produced based on the adjusted control point.

According to the present invention described in claim 5, it is possible to flexibly adjust and produce a scheduled route/course in which avoidance of an obstacle and adjustment of an approaching angle at the time of arrival are reflected.

In the invention described in claim 6, in the scheduled route/course producing process, the scheduled route/course is divided into a plurality of divided routes in which it is supposed that the control mode is switched.

According to the present invention described in claim 6, a mode of control corresponding to a divided route is carried out. With this, it is possible to switch between modes in accordance with the divided route and perform the control with respect to a scheduled route/course which reaches an arrival point especially including berthing, and it is possible to precisely follow the vessel to the arrival point.

In the invention described in claim 7, the speed of the vessel sailing through the scheduled route/course is calculated in the automatic sailing calculation process, and speed control means including a clutch of the automatic sailing device is controlled based on the calculated speed in the controlling process.

According to the present invention described in claim 7, by adjusting the speed by the speed control means such as a clutch, it is possible to easily induce a vessel to the arrival point including berthing for example.

In the invention described in claim 8, in the scheduled route/course producing process, when the speed of the vessel which is preset in the arrival position is zero, produce the scheduled route/course including the divided route having an approaching angle to the arrival position of the vessel becomes equal to a preset angle when a distance between the vessel and the arrival position reaches a preset distance.

According to the present invention described in claim 8, when a distance to the arrival position reaches a predetermined distance, the vessel is turned around toward the arrival position, the vessel is made to enter the arrival position at an appropriate approaching angle, and a divided route capable of securing an arrival orientation can be produced.

In the invention described in claim 9, in the scheduled route/course producing process, when the speed of the vessel which is preset in the arrival position is zero and the ongoing direction of the vessel is a preset approaching angle into the arrival position, there is produced the scheduled route/course including the substantially straight divided route which controls speed such that the speed of the vessel becomes zero when a distance between the vessel and the arrival position reaches a position which is shorter than a preset distance.

According to the present invention described in claim 9, it is possible to produce a divided route in which the speed is controlled and the vessel can reliably and more safely be induced to an arrival position.

In the invention described in claim 10, weather and maritime weather information around the vessel is acquired in the vessel information acquiring process, an external force acting on the vessel based on the weather and maritime weather information is added in the automatic sailing calculation process, and the steering/rudder angle and the speed are corrected.

According to the present invention described in claim 10, it is possible to make the vessel to follow the scheduled route/course more precisely by the steering/rudder angle and the speed which are corrected by adding an external force.

In the invention described in claim 11, the external force acting on the vessel by a wind direction and a wind speed acquired as the weather and maritime weather information is obtained, ship motion by the external force is predicted, the steering/rudder angle or the speed which cancels out the ship motion by the external force is derived, and the automatic sailing device is controlled such that disturbance by a wind is compensated.

According to the present invention described in claim 11, deviation from the scheduled route/course can be suppressed to a constant value or less even when a wind is strong.

An automatic guiding program of a vessel corresponding to claim 12, an automatic guiding program of the vessel using an automatic sailing device which at least automatically controls steering of the vessel underway, the program causes a computer to execute the scheduled route/course producing process in accordance with input of a condition, the vessel information acquiring process, the pure pursuit calculation process, the automatic sailing calculation process and the controlling process in the automatic guiding method of a vessel.

According to the present invention described in claim 12, control (pure pursuit control) based on calculation of pure pursuit and the automatic sailing device are combined, the automatic guiding to follow the scheduled route/course is carried out. With this, it is possible to provide a program in which control can be performed without carrying out a great amount of calculations, and even if there is disturbance, a deviation from the scheduled route/course can be suppressed to a constant value or less.

An automatic guiding system of a vessel corresponding to claim 13, an automatic guiding system of the vessel using an automatic sailing device which at least automatically controls steering of the vessel underway, including scheduled route/course producing means for acquiring a scheduled route/course or calculating the scheduled route/course, vessel information acquiring means for acquiring a position and a heading of the vessel, a pure pursuit calculating means for calculating a target point or an orientation of the target point which satisfies a predetermined condition on the scheduled route/course in an ongoing direction of the vessel based on the position of the vessel and the heading, an automatic sailing calculating means for calculating a steering/rudder angle of the vessel based on the target point or the orientation and the position or the heading, and control means for controlling the automatic sailing device based on the steering/rudder angle of the vessel.

According to the present invention described in claim 13, control (pure pursuit control) based on calculation of pure pursuit and the automatic sailing device are combined, the automatic guiding to follow the scheduled route/course is carried out, thereby performing control without necessitating a great amount of calculations, and even if there is disturbance, a deviation from the scheduled route/course can be suppressed to a constant value or less.

In the invention described in claim 14, a speed of the vessel is acquired in the vessel information acquiring means, and calculation is carried out using the speed in the pure pursuit calculating means and the automatic sailing calculating means.

According to the present invention described in claim 14, the vessel can more precisely follow the scheduled route/course in accordance with the speed.

In the invention described in claim 15, an input arrival position of the vessel of an arrival point and an arrival orientation are acquired in the scheduled route/course producing means, and the scheduled route/course capable of reaching the arrival position and securing the arrival orientation is calculated using the position, the heading and the speed acquired by the vessel information acquiring means.

According to the present invention described in claim 15, it is possible to produce a scheduled route/course formed from a smooth curved path connected to an arrival position with a direction (angle) of the arrival orientation.

In the invention described in claim 16, in the scheduled route/course producing means, sea area information is acquired, and the sea area information where the vessel cannot sail is added and the scheduled route/course is calculated.

According to the present invention described in claim 16, it is possible to enhance the safety of the automatic guiding system of a vessel, and to widen an sea area to which the automatic guiding system of a vessel can be applied.

In the invention described in claim 17, the scheduled route/course producing means includes a control point adjusting section in which a ship crew member checks and changes a set control point of the scheduled route/course, or an automatic control point adjusting section for automatically adjusting the control point based on vessel information obtained by the vessel information acquiring means, and the scheduled route/course is produced based on the adjusted control point.

According to the present invention described in claim 17, it is possible to flexibly adjust and manually or automatically produce a scheduled route/course in which avoidance of an obstacle and adjustment of an approaching angle at the time of arrival are reflected.

In the invention described in claim 18, in the scheduled route/course producing means, the scheduled route/course is divided into a plurality of divided routes which switch modes of the control.

According to the present invention described in claim 18, a mode of control corresponding to a divided route is carried out. With this, it is possible to switch between modes in accordance with the divided route and perform the control with respect to a scheduled route/course which reaches an arrival point especially including berthing, and it is possible to precisely follow the vessel to the arrival point.

In the invention described in claim 19, the automatic sailing calculating means calculates the speed of the vessel which sails the scheduled route/course, and the control means controls speed control means including a clutch of the automatic sailing device to obtain the calculated speed.

According to the present invention described in claim 19, by adjusting the speed by the speed control means such as a clutch, it is possible to easily induce a vessel to the arrival point including berthing for example.

In the invention described in claim 20, in the scheduled route/course producing means, when the speed of the vessel which is preset in the arrival position is zero, produce the scheduled route/course including the divided route having an approaching angle to the arrival position of the vessel becomes equal to a preset angle when a distance between the vessel and the arrival position reaches a preset distance.

According to the present invention described in claim 20, when a distance to the arrival position reaches a predetermined distance, the vessel is turned around toward the arrival position, the vessel is made to enter the arrival position at an appropriate approaching angle, and a divided route capable of securing an arrival orientation can be produced.

In the invention described in claim 21, in the scheduled route/course producing means, when the speed of the vessel which is preset in the arrival position is zero and an ongoing direction of the vessel is a preset approaching angle into the arrival position, there is produced the scheduled route/course including the substantially straight divided route which controls speed such that the speed of the vessel becomes zero when a distance between the vessel and the arrival position reaches a position which is shorter than a preset distance.

According to the present invention described in claim 21, it is possible to produce a divided route in which the speed is controlled and the vessel can reliably and more safely be induced to an arrival position.

In the invention described in claim 22, the vessel information acquiring means acquires weather and maritime weather information around the vessel, an external force acting on the vessel based on the weather and maritime weather information is added in the automatic sailing calculating means, and the steering/rudder angle and the speed are corrected.

According to the present invention described in claim 22, it is possible to make the vessel to follow the scheduled route/course more precisely by the steering/rudder angle and the speed which are corrected by adding an external force.

In the invention described in claim 23, the external force acting on the vessel by a wind direction and a wind speed acquired as the weather and maritime weather information is obtained, ship motion by the external force is predicted, the steering/rudder angle or the speed which cancels out the ship motion by the external force is derived, and the automatic sailing device is controlled such that disturbance by a wind is compensated.

According to the present invention described in claim 23, deviation from the scheduled route/course can be suppressed to a constant value or less even when a wind is strong.

In the invention described in claim 24, further includes display means which displays at least any one of the scheduled routes/courses, a position of the vessel, the heading, the target point and an orientation of the target point.

According to the present invention described in claim 24, a ship crew member can check the scheduled route/course and can monitor an operating status of the automatic guiding system.

A vessel corresponding to claim 25, includes an automatic guiding system of the vessel.

According to the present invention described in claim 25, it is possible to provide a vessel having an automatic guiding system in which pure pursuit control and an automatic sailing device are combined and precisely follow the scheduled route/course even if there is disturbance.

[EFFECT OF THE INVENTION]

According to the automatic guiding method of a vessel of the present invention, control (pure pursuit control) based on calculation of pure pursuit and the automatic sailing device are combined, the automatic guiding to follow the scheduled route/course is carried out, thereby performing control without necessitating a great amount of calculations, and even if there is disturbance, a deviation from the scheduled route/course can be suppressed to a constant value or less. Especially, by combining with the automatic sailing device such as autopilot, it becomes easy to follow a route in which the scheduled route/course has a curved portion by pure pursuit control.

Further, when a speed of the vessel is acquired in the vessel information acquiring process, and calculation is carried out using the speed in the pure pursuit calculation process and automatic sailing calculation process, the vessel can more precisely follow the scheduled route/course in accordance with the speed.

Further, when an input arrival position of the vessel of an arrival point and an arrival orientation are acquired in the scheduled route/course producing process, and the scheduled route/course capable of reaching the arrival position and securing the arrival orientation is calculated using the position, the heading and the speed acquired by the vessel information acquiring process, it is possible to produce a scheduled route/course formed from a smooth curved path connected to an arrival position with a direction (angle) of the arrival orientation.

Further, when in the scheduled route/course producing process, sea area information is acquired, and the sea area information where the vessel cannot sail is added and the scheduled route/course is calculated, it is possible to enhance safety of the automatic guiding method of a vessel, and to widen an sea area to which the automatic guiding method of a vessel can be applied.

Further, when in the scheduled route/course producing process, further includes a control point adjusting process for adjusting a control point which is set for changing the scheduled route/course formed from a curved path and the scheduled route/course is produced based on the adjusted control point, it is possible to flexibly adjust and produce a scheduled route/course in which avoidance of an obstacle and adjustment of an approaching angle at the time of arrival are reflected.

Further, when in the scheduled route/course producing process, the scheduled route/course is divided into a plurality of divided routes in which it is supposed that the control mode is switched, a mode of control corresponding to a divided route is carried out. With this, it is possible to switching between modes in accordance with the divided route and perform the control with respect to a scheduled route/course which reaches an arrival point especially including berthing, and it is possible to precisely follow the vessel to the arrival point.

Further, when the speed of the vessel sailing through the scheduled route/course is calculated in the automatic sailing calculation process and speed control means including a clutch of the automatic sailing device is controlled based on the calculated speed in the controlling process, by adjusting the speed by the speed control means such as a clutch, it is possible to easily induce a vessel to the arrival point including berthing for example.

Further, in the scheduled route/course producing process, when the speed of the vessel which is preset in the arrival position is zero, produce the scheduled route/course including the divided route having an approaching angle to the arrival position of the vessel becomes equal to a preset angle when a distance between the vessel and the arrival position reaches a preset distance. In this case, when a distance to the arrival position reaches a predetermined distance, the vessel is turned around toward the arrival position, the vessel is made to enter the arrival position at an appropriate approaching angle, and a divided route capable of securing an arrival orientation can be produced.

Further, in the scheduled route/course producing process, when the speed of the vessel which is preset in the arrival position is zero and the ongoing direction of the vessel is a preset approaching angle into the arrival position, there is produced the scheduled route/course including the substantially straight divided route which controls speed such that the speed of the vessel becomes zero when a distance between the vessel and the arrival position reaches a position which is shorter than a preset distance. In this case, it is possible to produce a divided route in which the speed is controlled and the vessel can reliably and more safely be induced to an arrival position.

Further, when weather and maritime weather information around the vessel is acquired in the vessel information acquiring process, an external force acting on the vessel based on the weather and maritime weather information is added in the automatic sailing calculation process and the steering/rudder angle and the speed are corrected, it is possible to make the vessel to follow the scheduled route/course more precisely by the steering/rudder angle and the speed which are corrected by adding an external force.

Further, when the external force acting on the vessel by a wind direction and a wind speed acquired as the weather and maritime weather information is obtained and ship motion by the external force is predicted and the steering/rudder angle or the speed which cancels out the ship motion by the external force is derived and the automatic sailing device is controlled such that disturbance by a wind is compensated, deviation from the scheduled route/course can be suppressed to a constant value or less even when a wind is strong.

According to the automatic guiding program of a vessel of the present invention, control (pure pursuit control) based on calculation of pure pursuit and the automatic sailing device are combined, the automatic guiding to follow the scheduled route/course is carried out. With this, it is possible to provide a program in which control can be performed without carrying out a great amount of calculations, and even if there is disturbance, a deviation from the scheduled route/course can be suppressed to a constant value or less even when there is disturbance.

According to the automatic guiding system of a vessel of the present invention, control (pure pursuit control) based on calculation of pure pursuit and the automatic sailing device are combined, the automatic guiding to follow the scheduled route/course is carried out, thereby performing control without necessitating a great amount of calculations, and even if there is disturbance, a deviation from the scheduled route/course can be suppressed to a constant value or less.

Further, when the speed of the vessel is acquired in the vessel information acquiring means and calculation is carried out using the speed in the pure pursuit calculating means and the automatic sailing calculating means, the vessel can more precisely follow the scheduled route/course in accordance with the speed.

Further, when an input arrival position of the vessel of an arrival point and an arrival orientation are acquired in the scheduled route/course producing means and the scheduled route/course capable of reaching the arrival position and securing the arrival orientation is calculated using the position, the heading and the speed acquired by the vessel information acquiring means, it is possible to produce a scheduled route/course formed from a smooth curved path connected to the arrival position with a direction (angle) of the arrival orientation.

Further, when in the scheduled route/course producing means, sea area information is acquired and the sea area information where the vessel cannot sail is added and the scheduled route/course is calculated, it is possible to enhance the safety of the automatic guiding system of the vessel, and to widen an sea area to which the automatic guiding system of a vessel can be applied.

Further, when the scheduled route/course producing means incudes a control point adjusting section in which a ship crew member checks and changes a control point which is set for changing the scheduled route/course formed from a curved path or an automatic control point adjusting section for automatically adjusting the control point based on vessel information obtained by the vessel information acquiring means, and the scheduled route/course is produced based on the adjusted control point, it is possible to flexibly adjust and manually or automatically produce a scheduled route/course in which avoidance of an obstacle and adjustment of an approaching angle at the time of arrival are reflected.

Further, when in the scheduled route/course producing means, the scheduled route/course is divided into a plurality of divided routes which switch modes of the control, a mode of control corresponding to a divided route is carried out. With this, it is possible to switch between modes in accordance with the divided route and perform the control with respect to a scheduled route/course which reaches an arrival point especially including berthing, and it is possible to precisely follow the vessel to the arrival point.

Further, when the automatic sailing calculating means calculates the speed of the vessel which sails the scheduled route/course and the control means controls speed control means including a clutch of the automatic sailing device to obtain the calculated speed, by adjusting the speed by the speed control means such as a clutch, it is possible to easily induce a vessel to the arrival point including berthing for example.

Further, in the scheduled route/course producing means, when the speed of the vessel which is preset in the arrival position is zero, produce the scheduled route/course including the divided route having an approaching angle to the arrival position of the vessel becomes equal to a preset angle when a distance between the vessel and the arrival position reaches a preset distance. In this case, when a distance to the arrival position reaches a predetermined distance, the vessel is turned around toward the arrival position , the vessel is made to enter the arrival position at an appropriate approaching angle, and a divided route capable of securing an arrival orientation can be produced.

Further, in the scheduled route/course producing means, when the speed of the vessel which is preset in the arrival position is zero and the ongoing direction of the vessel is a preset approaching angle into the arrival position, there is produced the scheduled route/course including the substantially straight divided route which controls speed such that the speed of the vessel becomes zero when a distance between the vessel and the arrival position reaches a position which is shorter than a preset distance. In this case, it is possible to produce a divided route in which the speed is controlled and the vessel can reliably and more safely be induced to an arrival position.

Further, when the vessel information acquiring means acquires weather and maritime weather information around the vessel, an external force acting on the vessel based on the weather and maritime weather information is added in the automatic sailing calculating means, and the steering/rudder angle and the speed are corrected, it is possible to make the vessel to follow the scheduled route/course more precisely by the steering/rudder angle and the speed which are corrected by adding an external force.

Further, when the external force acting on the vessel by a wind direction and a wind speed acquired as the weather and maritime weather information is obtained and ship motion by the external force is predicted and the steering/rudder angle or the speed which cancels out the ship motion by the external force is derived and the automatic sailing device is controlled such that disturbance by a wind is compensated, deviation from the scheduled route/course can be suppressed to a constant value or less even when a wind is strong.

Further, when further includes display means which displays at least any one of the scheduled routes/courses, a position of the vessel, the heading, the target point and an orientation of the target point, a ship crew member can check the scheduled route/course and can monitor an operating status of the automatic guiding system.

According to the vessel of the present invention, it is possible to provide a vessel having an automatic guiding system in which pure pursuit control and an automatic sailing device are combined and precisely follow the scheduled route/course even if there is disturbance.

[BRIEF DESCRIPTION OF THE DRAWINGS]

Fig. 1 is a schematic diagram of an automatic guiding system of a vessel according to a first embodiment of the present invention;
Fig. 2 is a flowchart of an automatic guiding method using the automatic guiding system of the vessel;
Fig. 3 is a diagram showing an algorithm of pure pursuit;
Figs. 4 are conceptual diagrams of following performance with respect to a scheduled route/course;
Figs. 5 are diagrams evaluating the following performance by ship trajectory trace when control in which automatic steering and pure pursuit are combined by an automatic sailing device is performed;
Fig. 6 is a flowchart of automatic berthing operation using the automatic guiding system;
Fig. 7 is a diagram showing examples of a produced berthing route/course and control mode;
Fig. 8 is a diagram showing a coordinate system for the berthing operation;
Fig. 9 is a schematic diagram of a berthing route/course by means of a Bezier curve;
Fig. 10 is a flowchart showing details of control process in the automatic berthing operation;
Fig. 11 is a diagram showing coordinate system of ship motion;
Figs. 12 are comparative diagrams of a searching method of hybrid-state A* and classical A* algorithm according to a second embodiment of the invention;
Fig. 13 is a diagram showing following control of a route performed by pure pursuit algorithm in a third embodiment of the invention;
Fig. 14 is a diagram showing a disturbed state of the following control of a route by a wind;
Fig. 15 is a diagram showing an analysis result;
Fig. 16 is a diagram showing wind loads coefficient of an experiment vessel in Example 1;
Fig. 17 is a configuration diagram of a ship's hull control system according to the Example 1 of the invention;
Fig. 18 is a diagram showing comparison between a measurement result of a turning test and an adjustment/simulation result;
Fig. 19 is a diagram showing an experiment result of automatic berthing operation at a virtual pier;
Fig. 20 is a diagram showing measurement values acquired by the vessel information acquiring means in experiment of the automatic berthing operation at the virtual pier;
Fig. 21 is a diagram showing an experiment result of automatic berthing operation at an actual pier;
Fig. 22 is a diagram showing measurement values acquired by the vessel information acquiring means in experiment of the automatic berthing operation at the actual pier;
Fig. 23 is a diagram showing an experiment result of automatic berthing operation at the virtual pier when a wind is strong;
Fig. 24 is a diagram showing measurement values acquired by the vessel information acquiring means in experiment of the automatic berthing operation at the virtual pier when a wind is strong;

Fig. 25 is a diagram showing a scheduled route/course to the berthing which is produced using hybrid-state A* by Example 2 of the invention;

Fig. 26 is a diagram showing an example of calculation of a berthing route/course using point clouds measured by LiDAR;

Fig. 27 is a diagram showing an example of calculation of a route in which a position a ship's hull is intentionally changed from a position measured by the LiDAR;

Fig. 28 is a diagram showing an actual vessel test result of the berthing control by pure pursuit and the HCS which are feedback controlled in Example 3 of the invention;

Fig. 29 is a diagram showing an actual measurement value of a state shown in Fig. 28;

Fig. 30 is a diagram showing an actual vessel test result of the berthing control by pure pursuit and HCS which are feedback controlled under strong wind; and

Fig. 31 is a diagram showing an actual measurement value in a state shown in Fig. 30.

[MODE FOR CARRYING OUT THE INVENTION]

An automatic guiding method of a vessel, an automatic guiding program of a vessel, an automatic guiding system of a vessel and a vessel according to a first embodiment of the present invention will be described below.

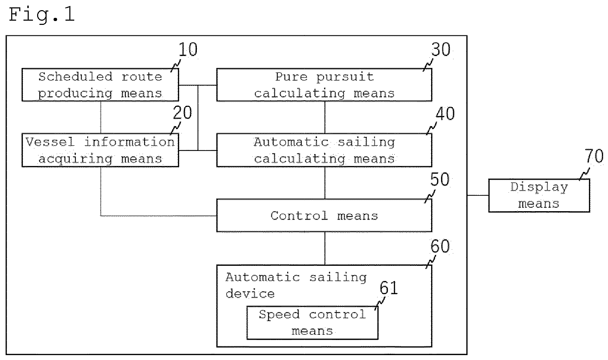

Fig. 1 is a schematic diagram of the automatic guiding system of the vessel.

The automatic guiding system of the vessel includes scheduled route/course producing means 10 for acquiring a scheduled route/course or calculating the scheduled route/course, vessel information acquiring means 20 for acquiring a position of the vessel and a heading, pure pursuit calculating means 30 for calculating a target point or an orientation of the target point which satisfies a predetermined condition on the scheduled route/course in an ongoing direction of the vessel based on the position of the vessel and the heading, automatic sailing calculating means 40 for calculating a steering/rudder angle of the vessel based on the target point or the orientation of the target point, control means 50 for controlling an automatic sailing device 60 based on the steering/rudder angle of the vessel, speed control means 61 such as a clutch of the automatic sailing device 60, and display means 70 such as a screen.

The automatic sailing device 60 may include an actuator such as a clutch for controlling a rudder for steering the vessel or a speed of the vessel, or may include only a control function section such as the rudder and a clutch, or may include only function for deriving a commanded value for controlling the rudder or clutch, or may use the above-described elements in combination by a rudder or the clutch.

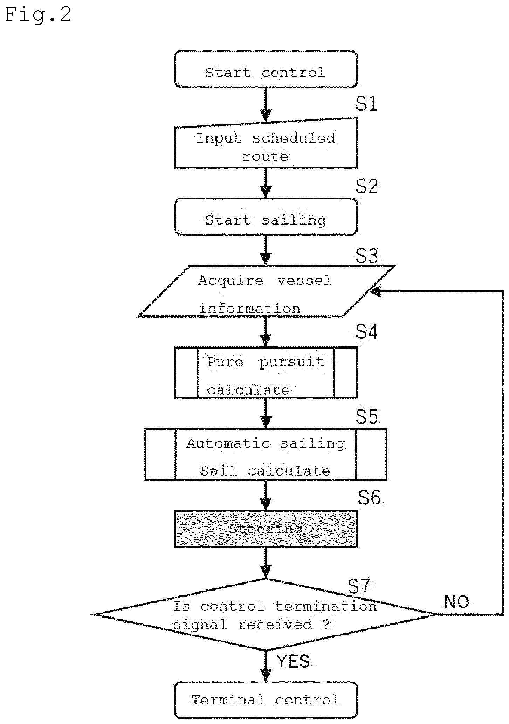

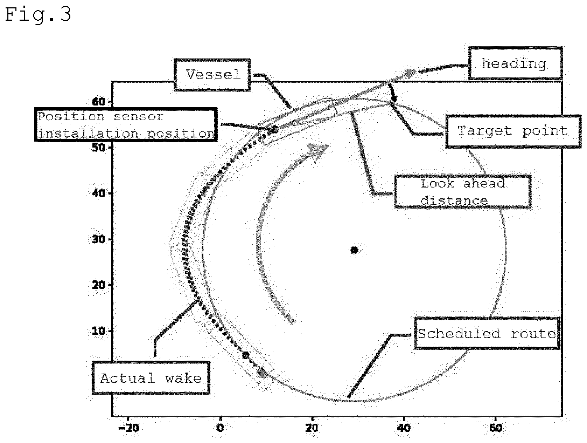

Fig. 2 is a flowchart of the automatic guiding method using the automatic guiding system of the vessel, and Fig. 3 is a diagram showing an algorithm of pure pursuit.

First, the scheduled route/course producing means 10 produces a scheduled route/course of the vessel (scheduled route/course producing process S1). The produced scheduled route/course is input to the pure pursuit calculating means 30 and the automatic sailing calculating means 40. The scheduled route/course producing means 10 can produce a scheduled route/course automatically or can produce a scheduled route/course by receiving the input of a preset scheduled route/course. Details of production of the scheduled route/course will be described later.

After the scheduled route/course producing process S1, the control means 50 starts maneuvering of the vessel based on the acquired scheduled route/course (sailing starting process S2).

The vessel information acquiring means 20 is, for example, a position sensor or an orientation angle sensor, etc., and acquires a position of the vessel and a heading (vessel information acquiring process S3).

The pure pursuit calculating means 30 calculates a target point or an orientation of the target point which satisfies a predetermined condition on the scheduled route/course in the ongoing direction of the vessel based on the position of the vessel and the heading (pure pursuit calculation process S4).

The pure pursuit is route following algorithm which is widely used in a field of robotics or automatic driving of a vehicle as a route following control algorithm. The pure pursuit controls turning movement to reach a target point under such a condition that a point, which is determined as a target point, on a route existing in front of a set position of a position sensor such as a GNSS sensor mounted on a vessel by a constant distance with respect to a preset directed route as shown in Fig. 3. A distance to the target point is called a look ahead distance.

When the target point (look ahead distance) is determined, the maximum curvature radius is obtained in a route curved path which is assumed at the time of following operation of a route, a circumference route having this circumference route is prepared, and the look ahead distance is set such that it is possible to follow the circumference route. A test may be carried out using the actual vessel to check whether the vessel can follow the route, or when the steering performance indecies such as K and T are found, it may be determined from a simple simulation.

In the pure pursuit calculation process S4, based on the scheduled route/course produced by the scheduled route/course producing means 10 in the scheduled route/course producing process S1, the pure pursuit calculating means 30 calculates a target point on a scheduled route/course of the ongoing direction by a predetermined distance , for example, or calculates an orientation of the target point, and sends the calculated orientation to the automatic sailing calculating means 40, for example. The pure pursuit calculating means 30 renews the orientations of the target points in succession as sailing operation (renews a set value).

The automatic sailing calculating means 40 calculates a steering/rudder angle of the vessel based on the target point or the orientation of the target point and a position of the vessel or the heading (automatic sailing calculation process S5).

The control means 50 controls the automatic sailing device 60 which automatically controls the steering operation based on the steering/rudder angle of the vessel calculated by the automatic sailing calculating means 40 (controlling process S6). According to this, a ship trajectory along the scheduled route/course is obtained.

The automatic sailing device 60 works in conjunction with such as a gyro, and when a set value such as an orientation are set, it controls the steering device such that a set orientation, and so on can be obtained by the PID control or adaptation control.

The control means 50 determines whether a control termination signal is received after the controlling process S6 (control termination determining process S7). When the vessel approaches a target location by a predetermined distance for example, the control termination signal is automatically input or manually input by a ship crew member.

When the control means 50 determines that the control termination signal is received in the control termination determining process S7, the control means 50 terminates the control of the automatic sailing device 60. When the control means 50 determines that the control termination signal is not received in the control termination determining process S7, the procedure is returned to the vessel information acquiring process S3 and control is continued.

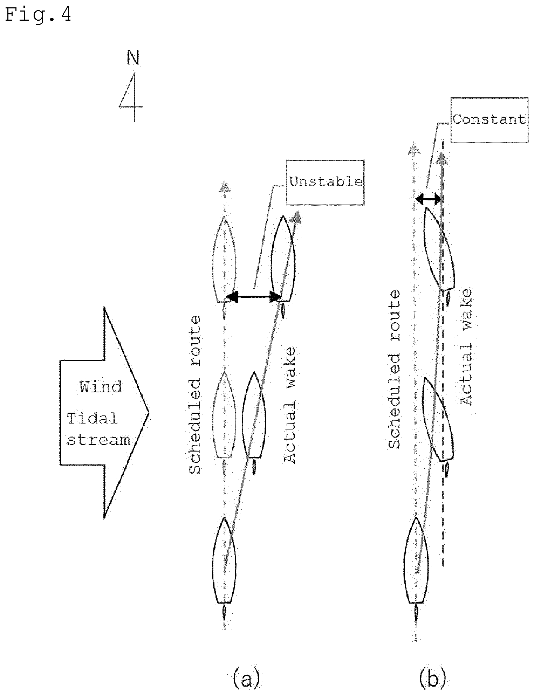

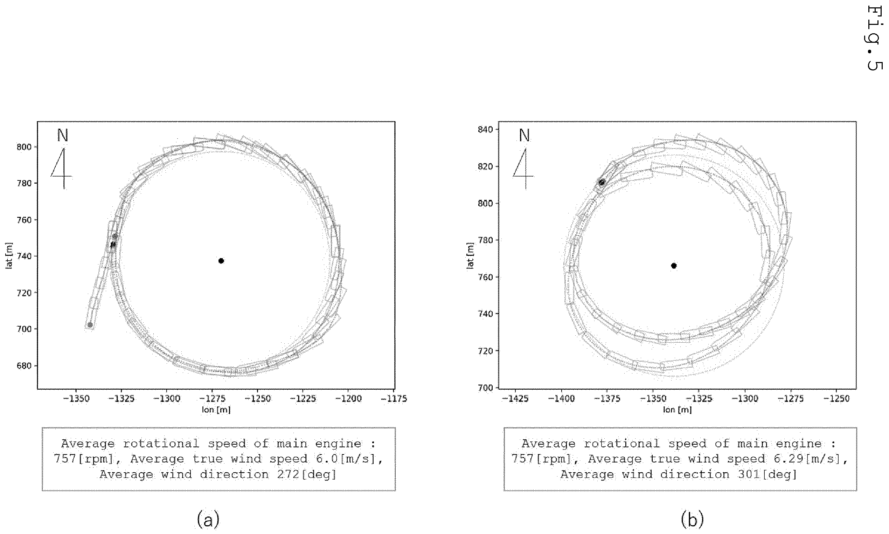

Figs. 4 are conceptual diagrams of following performance with respect to a scheduled route/course, wherein Fig. 4(a) shows the following performance only of the automatic steering performed by the automatic sailing device, and Fig. 4(b) shows the following performance when control in which automatic steering performed by the automatic sailing device and pure pursuit (simple following) are combined. Figs. 5 are diagrams evaluating the following performance by ship trajectory trace when control in which automatic steering performed by the automatic sailing device and pure pursuit are combinedis performed, wherein Fig. 5(a) shows a result of the vessel which follows the scheduled route/course by control performed in combination of automatic steering performed by the automatic sailing device and pure pursuit, and Fig. 5(b) shows a result of the vessel which follows the scheduled route/course at a constant rudder angle (+15°).

As shown in Fig. 4(a), since existing automatic steering (autopilot) using orientation gyro controls only a heading of the vessel, if the vessel receives influence of wind or tidal stream, the vessel deviates from the route.

On the other hand, as shown in Fig. 4(b) and 5(a), if control (pure pursuit control) based on calculation of pure pursuit and automatic steering are combined and automatic guiding for following the scheduled route/course is carried out, control is performed without necessitating a great amount of calculations like model prediction control, and even if there is disturbance, it is possible to suppress deviation from the scheduled route/course to a constant value or less, and to perform automatic control along the route. In particular, it easy to follow a route in which a scheduled route/course has a curved portion by pure pursuit control in combination with the automatic sailing device 60 such as autopilot.

As compared with control of only automatic steering, since control in which pure pursuit and automatic steering are combined includes control for compensating disturbance, deviation from the route can be suppress to a constant value or less. Further, since only a steering/rudder angle with respect to a target point on the route is calculated, a calculation load is small. Parameter required for control is essentially only one parameter, i.e., the look ahead distance. With respect to control stability, if the curvature of the route is small and forward-moving speed is a certain level, the stability of the system can be discussed by the stability of automatic steering. That is, when a stable control parameter is designed, it is possible to use classic stability analysis, and it is possible to guarantee basic stability based on control stability of the automatic steering.

Next, the automatic guiding method for inducing the vessel to an arrival point will be described. In this embodiment, the arrival point is the pier.

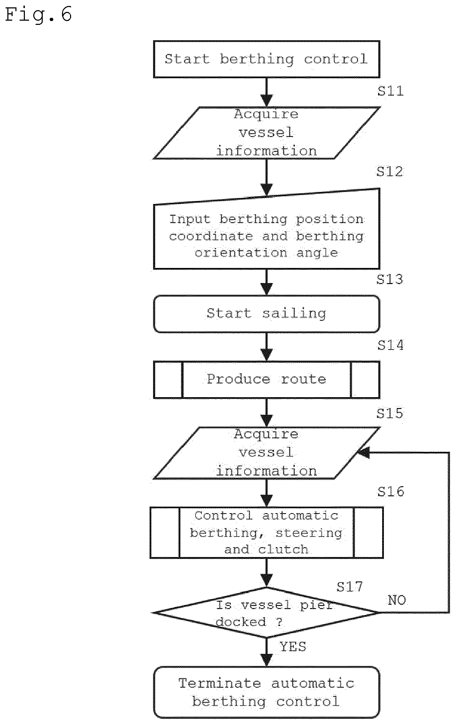

Fig. 6 is a flowchart of automatic berthing operation using the automatic guiding system.

If automatic berthing operation is started, the vessel information acquiring means 20 acquires a position (latitude, longitude) of the vessel, a heading, and vessel speed (first vessel information acquiring process S11).

After the first vessel information acquiring process S11, a ship crew member or the like inputs a berthing position coordinate and a berthing-time heading angle to the automatic guiding system (berthing information inputting process S12).

After the berthing information inputting process S12, the control means 50 starts the sailing operation (sailing starting process S13).

After the sailing starting process S13, the scheduled route/course producing means 10 acquires an input arrival position of an arrival point of the vessel (berthing position coordinate) and an arrival heading (berthing-time heading angle), and calculates a curved path which connects an arrival point as a scheduled route/course in which the arrival position and the arrival heading is taken into account, using the position of the vessel, a heading, and vessel speed acquired in the first vessel information acquiring process S11, thereby producing a scheduled route/course which reaches the arrival position and which can secure the arrival heading of the vessel (scheduled route/course producing process S14). According to this, it is possible to produce a scheduled route/course (berthing route/course) formed from a smooth curved path which is connected to the arrival position with direction (angle) of the arrival heading.

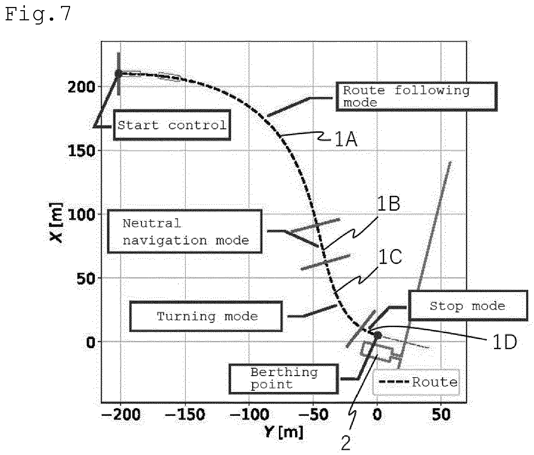

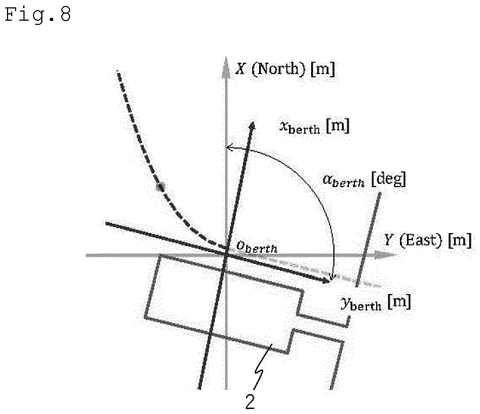

Here, Fig. 7 is a diagram showing examples of a produced berthing route/course and control mode, and Fig. 8 is a diagram showing a coordinate system for the berthing operation.

On the assumption that control modes by the control means 50 are switched in the scheduled route/course reaching the berthing, the scheduled route/course producing means 10 divides the scheduled route/course into a plurality of divided routes.

As shown in Fig. 7, in the embodiment, the scheduled route/course producing means 10 divides the berthing route/course shown by a broken line into four divided routes, i.e., a first divided route 1A controlled in the route following mode, a second divided route 1B controlled in the neutral navigation mode, a third divided route 1C controlled in the turning mode, and a fourth divided route 1D controlled in a stop mode. The control means 50 switches between control modes for the divided routes, respectively. This switching operation is based on, for example, procedures when a ship operator actually carries out berthing operation. Further, in this embodiment, to reduce excessive load on a main engine, speed reduction by rotation in opposite direction of propeller in a mode other than the last stop mode is not carried out, and speed reduction is carried out in a neutral state. Therefore, switching positions of the control modes are located at positions of 10, 70, 100 [m] along a route from a berthing position for example so that a distance which is necessary for speed reduction can be done while taking, into account, sailing distance required for speed reduction sufficiently for every sail in each of sections.

To make it easy to handle the position information, information of latitude and longitude obtained from the vessel information acquiring means 20 is handled by coordinate systems of X-Y plane in which a length unit is converted into meter while defining a berthing position as an origin point $O_{berth}$. At this time, north of an X axis is positive and east of a Y axis is positive. When clarifying a position relation with respect to the pier 2 clear, $x_{berth}$-$y_{berth}$ coordinate systems obtained by bringing the X-Y coordinate system opposed to the pier 2 and rotated are used (origin point is $O_{berth}$ also). Fig. 8 shows a relation of the two coordinate systems. In Fig. 8, $\alpha_{berth}$ corresponds to an orientation angle of the pier 2.

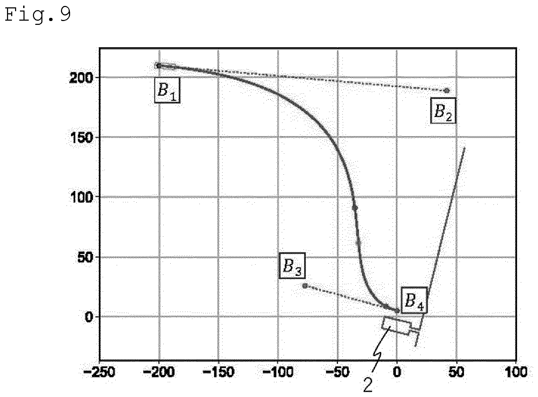

Fig. 9 is a schematic diagram of a berthing route/course by means of a Bezier curve.

From an actual sailing example and the like, it is considered that the berthing route/course for port-side or starboard-side berthing may be smooth curved paths which extend, in a direction of bow, from a position of the vessel when sailing is started, and which is connected to a position of the berthing at an angle parallel to the pier 2. This shape can be expressed by cubic Bezier curve. Generally, Bezier curves of degree N-1 is curves of degree N-1 defined from N-number of control points $B_0$ ... $B_{N-1}$, and this is expressed in the following equations (1) and (2) with t as parameters.

[Equation 1]

$$Bezier(t;N) = \sum_{i=0}^{N-1} B_i J_{N-1,i}(t) \quad \cdot \cdot \cdot (1)$$

[Equation 2]

$$J_{n,i}(t) = \binom{n}{i} t^i (1-t)^{n-i} \quad \cdot \cdot \cdot (2)$$

Here, $0<t<1$, $J_{n,i}(t)$ is Bernstein Basis Polynomials.

Since a route shape of Bezier curve of degree N can be expressed as N-degree function of t, cubic Bezier curve can be expressed as cubic degree formula at most. In Fig. 9, a control point $B_1$ is located at a position of a ship's hull when automatic sailing is started, a control point $B_2$ is located at a position extending from the control point $B_1$ in a direction of a heading angle $\phi$ by a direction of 0.6 $|y_{berth}|$ [m], a control point $B_3$ is located at a point separated away from a control point $B_4$ by 80 [m] in a direction $\alpha_{berth}$+180[deg], and the control point $B_4$ is a berthing target position. The berthing target position is set to $(x_{berth}, y_{berth}) = (5, 0)$ [m] while taking, into account, safety and a distance through which a mooring rope can be delivered. In this design, since the control point $B_1$ expands and contracts in accordance with a distance from the pier 2, an angle at the time of approaching the pier 2 can be set by a distance between the control point $B_3$ and the control point $B_4$ irrespective of a position of the ship's hull when control is started. When this is applied to other vessels, a berthing route/course from a shallower angle can be set by changing a distance when the control point $B_3$ is set in accordance with necessity.

If the Bezier curve is used, the most general berthing route/course is easily produced, but it is also possible to produce the berthing route/course using other curves such as a B-spline curve and a clothoid curve. A higher degree Bezier curve can also be used by increasing the control points. The berthing route/course (scheduled route/course) can also be produced using the hybrid-state A* algorithm as described below, instead of the route scheduled algorithm using the Bezier curve.

When the arrival point is the pier 2, the speed of the vessel at the arrival position is preset as zero.

In the scheduled route/course producing process S14, the scheduled route/course producing means 10 produces a scheduled route/course including the divided route such that having an approaching angle to the arrival position of the vessel becomes equal to a preset angle when a distance between the vessel and the arrival position reaches a preset distance. According to this, when a distance to the arrival position reaches a predetermined distance, the vessel is turned around toward the arrival position, the vessel is made to enter the arrival position at an appropriate approaching angle, and a divided route capable of securing an arrival orientation can be produced. In this embodiment, the third divided route 1C which is controlled in the turning mode corresponds to this.

When the speed of the vessel which is preset in the arrival position is zero and the ongoing direction of the vessel is a preset approaching angle into the arrival position, the scheduled route/course producing means 10 produces a scheduled route/course including a substantially straight divided route which controls speed such that the speed of the vessel becomes zero when a distance between the vessel and the arrival position reaches a position which is shorter than a preset distance. According to this, it is possible to produce a divided route in which the speed is controlled and the vessel can reliably and more safely be induced to an arrival position. In this embodiment, the fourth divided route 1D which is controlled to a stop mode corresponds to this. Here, "preset distance" in the case of the berthing is, for example, a distance through which a mooring rope can be delivered. Further, "a preset approaching angle into the arrival position" may have a width to some extent.

It is also possible that the scheduled route/course producing means 10 includes at least one of a control point adjusting section in which a ship crew member checks and changes a set control point of the scheduled route/course, and an automatic control point adjusting section for automatically adjusting the control point based on vessel information obtained by the vessel information acquiring means 20. In this case, in the scheduled route/course producing process S14, further includes a control point adjusting process for adjusting a control points $B_1$ to $B_4$ which are set for changing the scheduled route/course formed from a curved path, and the scheduled route/course is produced based on the adjusted control points.

According to this, it is possible to artificially or automatically flexibly adjust and produce a scheduled route/course in which avoidance of an obstacle such as other vessel or shallow waters and adjustment of an approaching angle at the time of arrival are reflected.

When a ship crew member carries out changes, the control points are adjusted by giving instructions to the control point adjusting section using a touch screen and a track ball while watching a screen.

When the automatic control point adjusting section carries out changes, it automatically adjusts the scheduled route/course based on marine chart information or sensor information such as LiDAR (light detection and ranging). For example, two dimensional information of an obstacle is acquired from the marine chart or sensor information, and when the scheduled route/course is covered with the obstacle, a length between the control point $B_1$ and $B_2$ or between $B_3$ and $B_4$ is changed every 0.1 m, and a route in which the scheduled route/course is not covered with the obstacle is obtained. The calculation may be carried out in a round-robin manner, or the calculation may be carried out efficiently using dynamic programming. When the calculation is not carried out, the system will issue a warning by means of display or sound, etc., to promote a ship crew member to carry out changes by the control point adjusting section, or take other measures.

The control point may be adjusted artificially or automatically when a first scheduled route/course is produced, or after a once produced scheduled route/course is checked, adjustment may be made to correct the control point, and the control point may be produced again.

Referring back to Fig. 6, after the scheduled route/course producing process S14, the vessel information acquiring means 20 acquires the position, the heading and the speed of the vessel (second vessel information acquiring process S15).

The control means 50 controls an automatic sailing device 60 based on the position of the vessel, the heading and the vessel speed acquired in the second vessel information acquiring process S15 (controlling process S16) .

After the controlling process S16, the control means 50 determines whether the vessel reaches the berthing position (berthing determining process S17).

When the control means 50 determines "NO" in the berthing determining process S17, i.e., the control means 50 determines that the vessel does not berthing, the procedure returns to the second vessel information acquiring process S15, and continues the control of the automatic sailing device 60. On the other hand, when the control means 50 determines "YES" in the berthing determining process S17, i.e., the control means 50 determines that the vessel has berthed, control of the automatic berthing is completed.

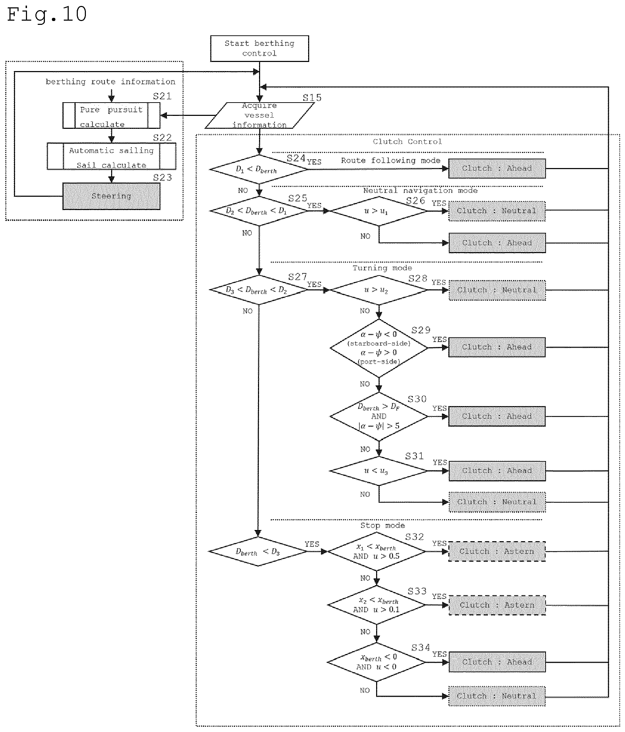

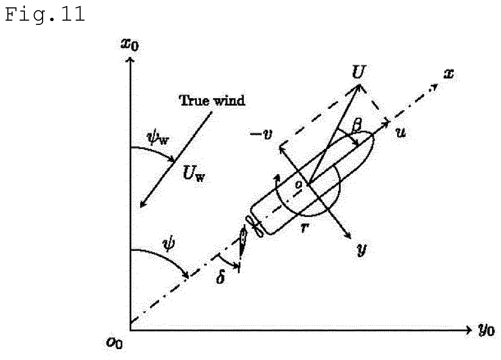

Fig. 10 is a flowchart showing details of the controlling process S16 in the automatic berthing operation, and Fig. 11 is a diagram showing coordinate system of ship motion. A space-fixed coordinate system $O_0$-$x_0y_0z_0$ in Fig. 11, $x_0$ is directed north and $y_0$ is directed in east. An origin point o of the ship-fixed coordinate system is located at a midship position of the ship's hull.

The pure pursuit calculating means 30 calculates a target point or an orientation of the target point which satisfies a predetermined condition on the scheduled route/course in an ongoing direction of the vessel based on the position of the vessel, the heading and the speed acquired by the vessel information acquiring means 20 in the second vessel information acquiring process S15 (pure pursuit calculation process S21).

When pure pursuit is applied to a vessel, since it is necessary to follow a target orientation angle by steering, HCS (Heading Control System) of PD control with respect to the target orientation angle is combined. At that time, if a relative orientation angle from the vessel (own vessel) to the target point is defined as $\alpha$, a commanded rudder angle by HCS of PD control with respect to the heading angle can be calculated by the following equation (3) while setting a maximum value of the commanded rudder angle to $\pm 45°$.

[Equation 3]

$$\delta^* = clip(K_P[\alpha - \psi]_{-180°, 180°} - K_D r, -45°, 45°) \quad \cdots (3)$$

Here, $K_P$ and $K_D$ respectively represent proportional gain and differential gain of the HCS, and $[x]_{-180°, 180°} = (x+180° \mod 360°)-180°$ represents calculation for bringing x[deg] into a range of [180°, -180°] .

The proportional gain and the differential gain are defined as $K_P$=3.0 and $K_D$=1.0 from results of simulation and actual vessel measurement, for example. Setting of $K_P$ with respect to normal speed is about 2.0. In gain design of HCS, since pure pursuit works in a differential control manner because it sees ahead of a route and controls, therefore, $K_P$ is set to a large value while taking, into account, following performance in an interval where curvature on the route is largest within a range in which normal course keeping control does not become instable. According to this, it is possible to enhance robust performance and route following performance with respect to disturbance.

A look ahead distance which is only parameter of the pure pursuit is defined as a distance from a target point existing ahead on a route as viewed from an installation position of a position sensor of the vessel information acquiring means 20 of the vessel. However, when a closest distance between the ship's hull position and the position on the route is equal to or larger than a set look ahead distance due to influence of disturbance, the closest position on the route is defined as a target point. The look ahead distance is set to 1.6 times of a length between perpendicular $L_{PP}$ for example based on simulation and actual vessel experiment of control for following a route having a constant curvature radius as shown in Fig. 3.

On the other hand, after third divided route 1C which is controlled in the turning mode, vessel speed is low and it becomes difficult to follow the target orientation. Hence, in the pure pursuit calculating means 30, a correction angle $\alpha_{add}$=-5 [deg] is added to orientation of the target point calculated by pure pursuit, and HCS is calculated, and orientation in a target berthing position is adjusted.

After pure pursuit calculation process S21, the automatic sailing calculating means 40 calculates a steering/rudder angle of the vessel based on a target point or orientation of the target point, the position or the heading, and the speed of the vessel (automatic sailing calculation process S22).

In this manner, in the second vessel information acquiring process S15, the speed of the vessel is acquired, and calculation is carried out using the speed in the pure pursuit calculation process S21 and the automatic sailing calculation process S22. According to this, the vessel can follow the scheduled route/course precisely in accordance with the speed.

The control means 50 controls the automatic sailing device 60 and steers the vessel based on the steering/rudder angle (commanded rudder angle) of the vessel calculated by the automatic sailing calculating means 40. The steering includes an operation for controlling the orientation of the vessel such as bow thruster operation. The pure pursuit and the automatic steering are combined and the control means 50 controls the position of the ship's hull. According to this, the vessel can precisely follow the berthing route/course.

The control means 50 controls the speed control means 61 including a clutch such that the speed (vessel speed) which is set as a target value for each of four control sections 1A to 1D by calculation of the automatic sailing calculating means 40 in four control sections 1A to 1D shown in Fig. 7.

The speed control means 61 is the control number of rotations of propeller by an engine telegraph operation (main engine load), or clutch, etc., but in this embodiment, the number of rotations of the main engine is fixed to the number of rotations of idling and the berthing operation is carried out while taking, into account, the mechanical processing of a load to the main engine and safety of the vessel. The bow thruster is not operated. Therefore, the speed can be controlled only by switching the clutch. The clutch can take three states, i.e., ahead, neutral and astern.

The control means 50 determines whether a straight distance $D_{berth}$ from a position sensor of the vessel information acquiring means 20 mounted in the vessel to a berthing position (pier 2) is larger than a first distance $D_1$ which is a straight distance from the berthing position to a boundary position (switching position of control mode) between the first divided route 1A and the second divided route 1B based on information acquired by the vessel information acquiring means 20 (first distance determining process S24).

When the control means 50 determines "YES" in the first distance determining process S24, i.e., when the control means 50 determines that the distance $D_{berth}$ to the berthing position is larger than the first distance $D_1$, the control means 50 controls in the route following mode. The route following mode, the clutch is always brought into an ahead state.

On the other hand, when the control means 50 determines "NO" in the first distance determining process S24, i.e., when the control means 50 determines that the distance $D_{berth}$ to the berthing position is equal to or smaller than the first distance $D_1$, the control means 50 determines whether the distance $D_{berth}$ to the berthing position is larger than a second distance $D_2$ which is a straight distance to a boundary position (switching position of control mode) between the second divided route 1B and the third divided route 1C (second distance determining process S25).

When the control means 50 determines "YES" in the second distance determining process S25, i.e., when the control means 50 determines that the distance $D_{berth}$ to the berthing position is larger than the second distance $D_2$, the control means 50 controls in the neutral navigation mode. In the neutral navigation mode, the control means 50 determines whether longitudinal direction speed u is larger than predetermined speed $u_1$ (first speed determining process S26). The predetermined speed $u_1$ is 1.0 [m/s] for example.

When the control means 50 determines "YES" in the first speed determining process S26, i.e., when the control means 50 determines the longitudinal direction speed u is larger than the predetermined speed $u_1$, the clutch is brought into a neutral state. On the other hand, when the control means 50 determines "NO" in the first speed determining process S26, i.e., when the control means 50 determines that the longitudinal direction speed u is equal to or smaller than the predetermined speed $u_1$, the clutch is brought into an ahead state.

The state of the clutch in the neutral navigation mode is basically neutral in this manner, and when the longitudinal direction speed u becomes equal to or smaller than the predetermined speed $u_1$ due to strong head-on wind or the like, the clutch is switched into the ahead state.

When the control means 50 determines "NO" in the second distance determining process S25, i.e., when the control means 50 determines that the distance $D_{berth}$ to the berthing position is equal to or smaller than the second distance $D_2$, the control means 50 determines whether the distance $D_{berth}$ to the berthing position is larger than a third distance $D_3$ which is a straight distance to a boundary position (switching position of control mode) between the third divided route 1C and the fourth divided route 1D (third distance determining process S27).

When the control means 50 determines "YES" in the third distance determining process S27, i.e., when the control means 50 determines that the distance $D_{berth}$ to the berthing position is larger than the third distance $D_3$, the control means 50 controls in the turning mode. In the turning mode, the control means 50 determines whether the longitudinal direction speed u is larger than predetermined speed $u_2$ (second speed determining process S28). The predetermined speed $u_2$ is 1.0 [m/s] for example.

When the control means 50 determines "YES" in the second speed determining process S28, i.e., when the control means 50 determines that the longitudinal direction speed u is larger than the predetermined speed $u_2$, the clutch is brought into the neutral state. On the other hand, when the control means 50 determines "NO" in the second speed determining process S28, i.e., when the control means 50 determines the longitudinal direction speed u is equal to or smaller than the predetermined speed $u_2$, the control means 50 determines whether $\alpha\text{-}\phi$ is <0 [deg] or not when the starboard-side is scheduled to be docked and $\alpha\text{-}\phi$ is <0 [deg] or not when the port-side is scheduled to be docked with respect to the target orientation angle $\alpha$ (target orientation angle determining process S29).

When the control means 50 determines "YES" in the target orientation angle determining process S29, i.e., when the control means 50 determines $\alpha\text{-}\phi$ is <0 [deg] (when the starboard-side is scheduled to be docked) or $\alpha\text{-}\phi$ is <0 [deg] (when the port-side is scheduled to be docked) with respect to the target orientation angle $\alpha$, the clutch is brought into the ahead state.

On the other hand, when the control means 50 determines "NO" in the target orientation angle determining process S29, i.e., when the control means 50 determines $\alpha\text{-}(|)$ is not <0 [deg] (when the starboard-side is scheduled to be docked) or $\alpha\text{-}\phi$ is not <0 [deg] (when the port-side is scheduled to be docked) with respect to the target orientation angle $\alpha$, the control means 50 determines whether the distance $D_{berth}$ to the berthing position is larger than the predetermined distance $D_F$ (e.g., 50 m) and whether $|\alpha\text{-}\phi|$ is >5 [deg] (distance · angle determining process S30).

When the control means 50 determines "YES" in the distance · angle determining process S30, i.e., when the control means 50 determines that the distance $D_{berth}$ to the berthing position is larger than the predetermined distance $D_F$ and $|\alpha\text{-}\phi|$ is >5 [deg], the clutch is brought into the ahead state.

On the other hand, when the control means 50 determines "NO" in the distance · angle determining process S30, i.e., when the control means 50 determines that the distance $D_{berth}$ to the berthing position is equal to or smaller than the predetermined distance $D_F$ or $|\text{-}\phi|$ is not >5 [deg], the control means 50 determines whether the longitudinal direction speed u is smaller than predetermined speed $u_3$ (third speed determining process S31). The predetermined speed $u_3$ is 0.3 [m/s] for example.

When the control means 50 determines that "YES" in the third speed determining process S31, i.e., when the control means 50 determines that the longitudinal direction speed u is smaller than the predetermined speed $u_3$, the clutch is brought into the ahead state. On the other hand, when the control means 50 determines "NO" in the third speed determining process S31, i.e., when the control means 50 determines that the longitudinal direction speed u is larger than the predetermined speed $u_3$, the clutch is brought into the neutral state.

Thus, the state of the clutch in the turning mode is basically the neutral state, and when a predetermined condition is satisfied, the state is switched to the ahead state.

When a stop mode is scheduled after the turning mode, it is preferable that the speed is lowered to predetermined speed during the turning mode.

When the control means 50 determines "NO" in the third distance determining process S27, i.e., when the control means 50 determines that the distance $D_{berth}$ to the berthing position is equal to or smaller than the third distance $D_3$, the control means 50 controls in the stop mode. In the stop mode, the control means 50 determines whether a distance $x_{berth}$ to the berthing position is larger than a predetermined distance $x_1$ and the longitudinal direction speed u is larger than predetermined speed (e.g., 0.5 [m/s]) (first distance • speed determining process S32).

When the control means 50 determines "YES" in the first distance · speed determining process S32, i.e., when the control means 50 determines that the distance $x_{berth}$ is larger than the predetermined distance $x_1$ and the longitudinal direction speed u is larger than the predetermined speed, the clutch is brought into the astern state.

On the other hand, when the control means 50 determines "NO" in the first distance · speed determining process S32, i.e., when the control means 50 determines that the distance $x_{berth}$ is smaller than the predetermined distance $x_1$ or the longitudinal direction speed u is equal to or smaller than the predetermined speed, the control means 50 determines whether the distance $x_{berth}$ to the berthing position is larger than a predetermined distance $x_2$ and the longitudinal direction speed u is larger than the predetermined speed (e.g., 0.1 [m/s]) (second distance · speed determining process S33).

When the control means 50 determines "YES" in the second distance · speed determining process S33, i.e., when the control means 50 determines that the distance $x_{berth}$ is larger than the predetermined distance $x_2$ and the longitudinal direction speed u is larger than the predetermined speed, the clutch is brought into the astern state.

On the other hand, when the control means 50 determines "NO" in the second distance · speed determining process S33. i.e., when the control means 50 determines that the distance $x_{berth}$ is equal to or smaller than the predetermined distance $x_2$ or the longitudinal direction speed u is equal to or smaller than the predetermined speed, the control means 50 determines whether the distance $x_{berth}$ to the berthing position is smaller than 0 and the longitudinal direction speed u is smaller than 0 [m/s] (third distance · speed determining process S34) .

When the control means 50 determines "YES" in the third distance · speed determining process S34, i.e., when the control means 50 determines that the distance $x_{berth}$ is smaller than 0 and the longitudinal direction speed u is smaller than 0 [m/s], the clutch is brought into the ahead state.

On the other hand, when the control means 50 determines "NO" in the third distance · speed determining process S34, i.e., when the control means 50 determines that the distance $x_{berth}$ is equal to or larger than 0 or the longitudinal direction speed u is equal to or larger than 0 [m/s], the clutch is brought into the neutral state.

In this manner, in the last stop mode, the clutch is brought into the astern state stepwisely until the longitudinal direction speed u becomes equal to or smaller than 0.1 [m/s]. When u becomes <0 [m/s] at $x_{berth}$ is <-0.0 [m] before berthing due to head-on wind or the like, the clutch is brought into the ahead state. When these conditions are not satisfied, the clutch is brought into the neutral state.

By carrying out the mode of control corresponding to the divided route in this manner, it is possible to switch between modes in accordance with the divided route and perform the control with respect to the scheduled route/course which reaches the arrival point especially including the berthing, and it is possible to precisely follow the vessel to the arrival point.

The speed of the vessel sailing through the scheduled route/course is calculated in the automatic sailing calculation process S22, and the speed control means 61 including the clutch of the automatic sailing device 60 is controlled based on the calculated speed. According to this, the speed is adjusted by the speed control means 61 such as the clutch, and it is possible to easily induce the vessel to the arrival point including the berthing for example. Especially, in a mode other than the stop mode of the fourth divided route 1D, to prevent an excessive load on the main engine, astern operation of the clutch is limited, speed reduction is basically carried out by neutral sailing. In the turning mode of the third divided route 1C, even if a difference between the target orientation angle and the heading angle becomes large, if vessel speed is not sufficiently small, it is preferable that steep turning is not carried out by applying propeller rearward flow to the rudder.

According to the automatic guiding system of a vessel, vessel speed and position control during berthing operation are separated from each other, and a route to the berthing position is set and the following operation is carried out. By carrying out such berthing operation by following the route, a ship crew member can previously check the scheduled route/course (berthing route/course). By checking deviation from the route, it is possible to check whether the automatic control is normally operated. Deviation from the berthing route/course and the route is displayed on the display means 70. On the display means 70, the following information is displayed in addition to the deviation, i.e., a position of the vessel, heading, a target point, orientation of the target point, a speed of the vessel, weather and maritime weather information and calculated external force.

By controlling the following operation of the route capable of setting an angle at the time of approaching the pier 2 by the route, it is possible to design such that a problem of the route schedule and a problem of safety of control are separated from each other.

It is also possible that the vessel information acquiring means 20 acquires weather and maritime weather information around the vessel in the second vessel information acquiring process S15, and the automatic sailing calculating means 40 corrects a steering/rudder angle and a speed by adding an external force to the vessel based on the weather and maritime weather information in the automatic sailing calculation process S22. It is possible to make the vessel to follow the scheduled route/course more precisely by the steering/rudder angle and the speed which are corrected by adding the external force.

In measurement of the external force, when the vessel changes a course, accelerates or reduces speed, it is difficult to precisely measure. Therefore, it is preferable that measurement is carried out when the vessel straightly sails at constant speed such as the neutral navigation mode, and the steering/rudder angle and the speed are corrected using a result of the measurement.

The automatic guiding to follow the scheduled route/course by combining the pure pursuit and the automatic sailing device 60 in this manner is especially effective when delicate control is carried out along the scheduled route/course formed from a curved path such as the berthing.

The automatic guiding method and the automatic guiding system mainly of a vessel are described above, but the present invention can also be applied to an automatic guiding program of a vessel using the automatic sailing device 60 which automatically controls at least a steering operation of a sailing vessel, and the automatic guiding program of a vessel makes a computer execute scheduled route/course producing processes S1, S14, vessel information acquiring processes S3, S11, S15, pure pursuit calculation processes S4, S21, automatic sailing calculation processes S5, S22, and controlling process S6, S16 which satisfy conditions. According to this, the pure pursuit and the automatic sailing device 60 are combined, and automatic guiding for following a scheduled route/course is carried out. Therefore, it is unnecessary to carry out a large amount of calculations unlike model prediction control, and it is possible to provide a program which suppresses deviation from a scheduled route/course to a constant level or lower even if there is disturbance.

Next, an automatic guiding method of a vessel, an automatic guiding program of a vessel, an automatic guiding system of a vessel and a vessel according to a second embodiment of the present invention will be described. The same symbols are allocated to the same function members as those of the above-described embodiment, and description thereof will be omitted.

In the above-described first embodiment, the scheduled route/course (berthing route/course) is produced by the route scheduled algorithm using the Bezier curve, but since the algorithm calculates the route geometrically from a ship's hull position and a target point of berthing without taking, into account, sailing environment such as surrounding landform and shallow waters existing around the pier 2, there is a possibility that a route through which a vessel cannot easily sail is produced depending on an initial position of the own vessel.

Hence, in this embodiment, sea area information is acquired in the scheduled route/course producing processes S1 and S14, the sea area information where the vessel cannot sail by the scheduled route/course producing means 10 is added, and the scheduled route/course is calculated. Here, "the sea area information where the vessel cannot sail" is information concerning sea area where the vessel cannot sail because an obstacle such as a moving object or floating object such as a vessel or shallow waters exists. According to this, it is possible to enhance safety of the automatic guiding of a vessel, and to widen sea area where automatic guiding of a vessel can be applied.

As the sea area information to be acquired, there are one obtained by electronic navigational chart which can be utilized even by offline and one detected in actual sea area during sailing by sensors such as LiDAR. Sea area information detected in the actual sea area during sailing is new information which is known on the spot, and the scheduled route/course producing means 10 can again calculate the scheduled route/course based on this new information.

In this embodiment, hybrid-state A* algorithm which is one of route searching algorithms is used, a scheduled route/course which is suitable for berthing control taking sailing environment into account is produced.

Here, the hybrid-state A* algorithm (also called hybrid A*) is algorithm for searching a route based on classical algorithm which is called A*. In the A*, a searching region is divided into a grid shape, and a route to a goal is searched. The A* is classified into a graph searching algorithm, nodes corresponding to grid which is adjacent to (not used exclusively by obstacle) circumference are searched in a sequential manner from a start node representing an initial position and a route to a node of goal is searched finally.

In the search, costs of the nodes are calculated. When the shortest route from start to the goal is searched, costs of the nodes correspond to values of heuristic functions defined separately from a moving distance to the nodes. General heuristic functions are simple returning a distance to the goal. To find a target route to the goal by searching the nodes in a direction in which the costs become small is A* algorithm.

Three devisals are made for the hybrid-state A*.

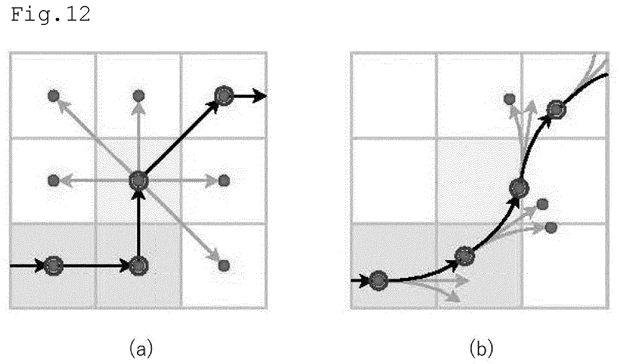

A first devisal is to search using four dimensional searching space (x, y, θ, r) at the time of a search. Here, x and y are original position coordinates, θ is a direction of a moving body (in the case of vessel, this corresponds to heading), and r is a moving direction with respect to a route, and this is expressed by 0 (ahead) and 1 (astern). By searching in the four dimensional space from an original two dimensional plane, the hybrid-state A* search can continuously search a two dimensional space, an obtained locus is not a broken line which connects centers of grids which can be obtained by A*, and this is expressed by a continuous curved path. Here, Figs. 12 are comparative diagrams of a searching method of hybrid-state A* and classical A* algorithm concerning a searching method of the hybrid-state A*, wherein Fig. 12(a) shows a discretized state of classical A* algorithm, and Fig. 12 (b) shows a continuous state of the hybrid-state A* algorithm.

A second devisal is to use a cost map using dynamic programming as a heuristic function to reduce calculation time which is increased when the number of dimension to be searched is increased, and a searching operation is carried out efficiently. According to this, even if landform is complicated, it is possible to efficiently search a route to a goal.

Since each of nodes are searched in a discretized behavior space even in the searching in the four dimensional space, an attitude of a goal defined in an actual continuous space is not achieved as it is. Hence, a third devisal is to adopt a technique called Analytic Expansion. In the Analytic Expansion, a problem in a terminal end state by expanding a route to connect a midway route obtained by searching of node to a goal by means of a curved path. Normally, in the expansion of a route, a route generating algorithm called Reeds-shepp path is used. The Reeds-shepp path is an algorithm which produces the shortest route composed of an arc and a straight line in which an ongoing direction is defined from the position and orientation of two given points.

A candidate of a route obtained through these steps determines whether the route is effective by judging collision. If it is within a region, the collision is determined by calculation is carried out to find whether a point of an obstacle is included in a rectangular region which expresses a shape of a moving body. This flow is repeated, and when an effective route where there is no collision is finally found, the procedure is completed.

In the first embodiment described above, positions of four control points B1, B2, B3 and B4 are designed by reference to ship trajectory when a person sails the vessel to berth it as shown in Fig. 9. An especially important thing to produce this route is a curvature of the route of a location existing about 50 m from the pier. In this section, it is necessary to avoid the surrounding shallow waters while setting an approaching angle of the own vessel with respect to the pier 2 becomes about 20°. Furthermore, the curvature is limited to some extent while taking the turning performance of the vessel and the characteristics of the route following control into account. Further, a distance from the pier 2 becomes short and the number of rotations of the propeller is reduced so, it is required to control the orientation angle in a state where the rudder steering performance is deteriorated.

Hence, when the searching by the hybrid-state A* algorithm is applied to the berthing operation, it is necessary to limit the curvature of the route as in the route of the Bezier curve, and to form a berthing route/course such that the approaching angle becomes an appropriate angle. In route schedule by the hybrid-state A*, the number of obstacles is basically reduced in a route in the vicinity of the pier 2, a possibility that the route is expanded by Reed-Shepp path is high. Therefore, it is possible to produce a route having an appropriate approaching angle by limiting the curvature of the Reed-Shepp path.

Here, it is possible to expand this route using a route scheduled algorithm by the Bezier curve, but Reed-Shepp path composed of an arc and a straight line has one merit concerning subsequent control of following performance of the route. In the case of a route by the Bezier curve, curvature is basically continuously changed and is not constant. On the other hand, a route of Reed-Shepp path is composed of an arc and a straight line and therefore, curvature is constant in each section. If the curvature of a route is constant, a difference (arc) of a target orientation (straight line) or orientation becomes constant in control of following performance of a route such as pure pursuit. In the case of a vessel, if a fact that autopilot is used for control of a heading is taken into account, it is preferable that a target value is constant from the standpoint of control. If a target value moves, delays of target following control is accumulated, and there is a possibility that precision of control is deteriorated. The pure pursuit also is originally designed under the assumption that curvature of a route is constant. Hence, Reed-Shepp path generated using appropriate curvature is excellent in the aspect of control of following performance.

On the other hand, in the case of the Reed-Shepp path, an ongoing direction of a route is also defined, i.e., a route which must be followed by astern is produced in some cases. When it is necessary to produce a route which does not need astern at the time of berthing, it is possible to replace such a route by Dubins path composed of a route having only an ahead direction, or it is possible to suppress the generation of an astern route by giving costs larger than other costs such as a cost map with respect to a route of astern and ahead directions when the Reed-Shepp path is calculated.

Next, an automatic guiding method of a vessel, an automatic guiding program of a vessel, an automatic guiding system of a vessel and a vessel according to a third embodiment of the present invention will be described. The same symbols are allocated to the same function members as those of the above-described embodiment, and description thereof will be omitted.

In the case of control of following performance of a route in which pure pursuit and HCS (Heading Control System) are combined described in the first embodiment, if the wind speed is smaller than 3 [m/s], route deviation can be made small, but if the wind speed becomes larger, influence of wind disturbance becomes large, and route deviation cannot be made small in some cases. To expand ODD (Operational Design Domain) of automatic guiding of a vessel, a control system capable of compensating route deviation even when a wind speed becomes large is required. Considering it is applied to a general vessel, it is preferable that the number of parameters required for designing a control system is minimized.

Thereupon, the automatic guiding system of a vessel of this embodiment obtains external force (wind loads) acting on the vessel based on a wind direction and a wind speed acquired as weather and maritime weather information by a vessel information acquiring means 20, ship motion of ship's hull caused by the external force is predicted, a steering/rudder angle or speed which cancels out ship motion caused by the external force is introduced, and an automatic sailing device 60 is controlled such that disturbance by wind is compensated. According to this, even when wind is strong, deviation from a scheduled route/course can be suppressed to a constant value or less.

Here, " steering/rudder angle or speed which cancels out ship motion caused by the external force" is steering/rudder angle or speed for not causing ship motion before predicted ship motion is generated.

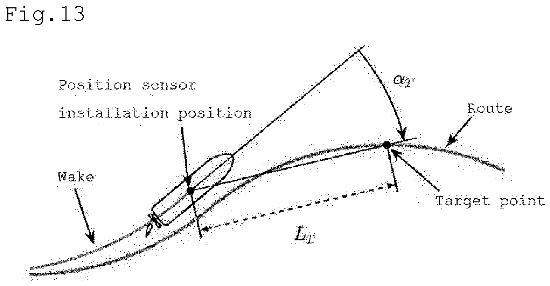

Fig. 13 is a diagram showing following control of a route performed by pure pursuit algorithm. As shown in Fig. 13, the pure pursuit controls the following performance by controlling orientation such as to aim at a target point existing a little bit ahead of a route. An HCS (Heading Control System) by PD control performs control of the orientation. This control has a merit that the number of control parameters is small. Especially concerning the pure pursuit, it is possible to design the same only by adjusting a distance $L_T$ from a position of an own vessel to a target point. Concerning vessel speed, vessel speed control by switching clutch is used.

In this embodiment, to enhance the berthing performance under strong wind, vessel speed control is further adjusted. In a turning mode, neutral is set to a base, and the clutch is switched to forward movement only when the following conditions are satisfied for example.

A) With respect to a target orientation angle $\alpha$, a relation $\alpha$-$\phi$<0[deg]<0 is established and longitudinal direction speed u is 1.0 [m/s] or smaller.
B) With respect to a target orientation angle $\alpha$, a relation $\alpha$-$\phi$<0[deg]<0 is established and a distance along a route to a berthing point is 25 [m] or larger.
C) longitudinal direction speed u is 0.3 [m/s].

According to this, rudder steering performance of the turning mode which requires control precision is enhanced, and control of a heading is stabilized.

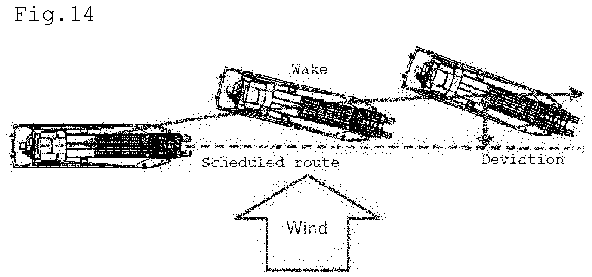

Fig. 14 is a diagram showing a disturbed state of the following control of a route by wind. Fig. 14 shows a state where deviation from a scheduled route/course is generated as influence on route following control by wind disturbance. When a vessel receives wind from a lateral direction, deviation from a scheduled route/course becomes larger.

In the case of a vessel which floats in water, unlike a vehicle which comes into contact with ground with wheels, lateral slide caused by a side wind or deviation of a heading become problems. By reducing route deviation caused by wind, it is possible to enhance the precision of route following control.

In the case of pure pursuit related to a vehicle, change in resistance cause by head-on wind or following wind is taken into account in many cases. On the contrary, in the case of a vessel, the vessel receives external force continuously by side wind, and its control system responses variation by little and little of a route slowly as a result and therefore, feed forward control is effective. Hence, this embodiment uses a technique to incorporate a feed forward control mechanism which cancels a lateral component of a ship's hull of a rudder force generated by the external force (wind loads) and steering into a route following control.

To use this technique, concerning side force acting on the ship's hull by steering, a steering movement mathematical model formed from data of actual vessel test in a later-described Example 1 was analyzed. Analysis target is movement corresponding to the clutch at ahead (Forward), neutral, and astern (Reverse) states shown in Table 1 below. Here, u, v, r are longitudinal direction speed, lateral speed and turning angle speed in a central of ship's hull, respectively, and nP is the number of rotations of propeller. Concerning Forward and Neutral, the number of rotations of idling of main engine are based on a movement state at the time of straight moving. Concerning Reverse, since the clutch is brought into reverse rotation only in the stop mode, the reverse was analyzed based on a state where vessel speed is zero.

[Table 1]

|  | Forward | Neutral | Reverse |
|---|---|---|---|
| $u$ [$m/s$] | 2.072 | 2.072 | 0.0 |
| $v$ [$m/s$] | 0.0 | 0.0 | 0.0 |
| $r$ [$deg/s$] | 0.0 | 0.0 | 0.0 |
| $nP$ [$rps$] | 3.09 | 0.0 | -3.09 |

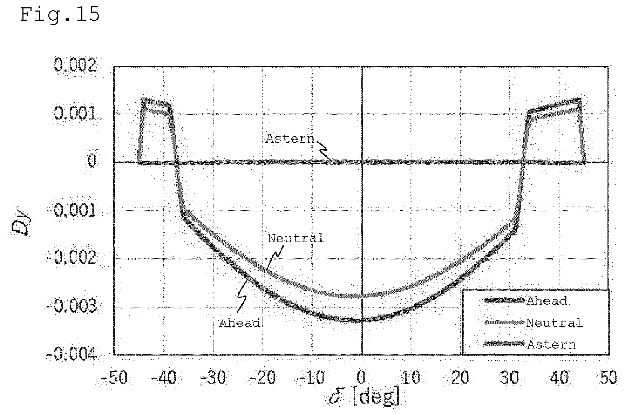

Fig. 15 is a diagram showing an analysis result. Here, Dy represents a coefficient obtained such that a liner relation equation of the following equation (4) is satisfied when rudder force acting in the lateral direction of the ship's hull when the rudder is steered is defined as $F_{dy}$, and $\delta$ represents a rudder angle.
[Equation 4]

$$F_{dy}/(m + m_y) = D_y \delta R \qquad \cdots (4)$$

Here, m represents mass of a vessel, $m_y$ represents added mass of Sway movement, and $\delta R$ represents steering/rudder angle. Among them, a value of Dy when the steering/rudder angle is zero is Forward: -0.003272, Neutral: -0.002771, and Reverse: 0.0. Side force generated by steering in each of clutch states is estimated using this coefficient.
Wind loads can be calculated using methods described in document "Kitamura F. et al.: Estimation of above water structural parameters and wind loads on ships, Ships and offshore structures, 12-8, 2017.", and document "Fumitoshi Kttamura, Michio Ueno, Toshifumi Fujiwara: Kaijou Gijyutu Anzen Kenkyusho Houkoku Vol 9, NO.3 pp.207-213, 2009 concerning vessel wind loads easy estimating program".

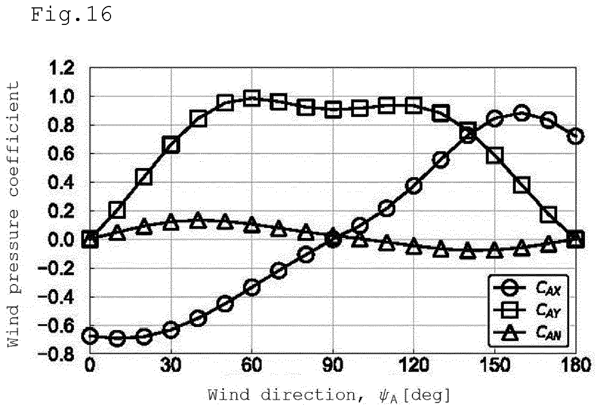

Fig. 16 is a diagram showing wind loads coefficient of an experiment vessel in Example 1. Wind loads $Y_A$ acting on a lateral direction of a ship's hull is calculated by the following equation (5) using wind loads coefficient $C_{AY}$.
[Equation 5]

$$Y_A = \frac{1}{2}\rho_A A_F U_A^2 C_{AY}(\psi_A) \qquad \cdots (5)$$

Here, $\rho_A$ represents density of air, $A_F$ represent a side projection area of construction on a waterplane, and $U_A$ and $\phi_A$ respectively represent apparent wind speed and apparent wind direction at an installation position of an anemometor. Since $\phi_A$ is defined as angle of attack with respect to the ship's hull, $\phi_A$ has a positive direction opposite from an angle direction of the true wind direction $\phi_w$ in Fig. 11. Further, in $\phi_A$, wind from heading is 0°.
The steering/rudder angle which cancels side wind loads can be obtained by solving $Y_A = F_{dy}$ from the equations (4) and (5). By steering the vessel based on the obtained rudder angle, the side component of the ship's hull of the wind loads can be canceled, but the value is only an estimated value, and there is a possibility that an error is generated in the wind pressure moment in a turning direction, disturbance element such as tidal stream and a sensor value. An error generated from these factors is collectively compensated by pure pursuit and HCS possessed by the feedback mechanism.
Hence, a total $\delta R_{ff} + \delta Rfb$ of a steering/rudder angle $\delta R_{ff}$ calculated by a feedforward control section of wind loads compensation, and the steering/rudder angle $\delta R_{fb}$ calculated from pure pursuit and a feedback control section of HCS is an actually steering angle.

[Example 1]

To verify an automatic berthing using the automatic guiding system of a vessel using route following control by the pure pursuit and the HCS in the first embodiment, an actual vessel experiment was carried out in sea area (Innoshima marina) around Innoshima Onomichi-shi Hiroshima prefecture.
In the sea area where the experiment was conducted, there were shallow water depth locations near the floating pier, and it was necessary to prepare berthing route/course to avoid such locations. In this experiment, berthing by starboard-side toward the floating pier and virtual pier was carried out.
To carry out the automatic berthing operation by an actual vessel, development was carried out for a small vessel in which it is anticipated influence of disturbance received at the time of low speed becomes large. A general vessel equipped a propeller and a rudder was expected as specification of the target vessel, an experiment vessel "Shinpo" managed by National Maritime Research Institute was used as a vessel under test as such condition was satisfied. Main subjects of Shinpo at the time of the experiment are shown in the following Table 2.

[Table 2]

| Subjects | Value |
|---|---|
| Length overall, $L_{oa}$ [m] | 16.5 |
| Ship length between perpendiculars, $L_{pp}$ [m] | 14.9 |
| Ship breadth (1.0WL), $B$ [m] | 4.38 |
| Ship draft, $d_m$ [m] | 0.502 |
| Trim, $\tau$ [m] | 0.348 |
| Diameter of propeller, D [m] | 1.0 |
| Side area of rudder, $A_R$ [m$^2$] | 0.780 |
| Height of rudder, $H_R$ [m] | 1.05 |
| Mass, m [ton] | 21.53 |
| Block coefficient, $C_b$ | 0.642 |

As vessel information acquiring means used for automatic guiding of a vessel, the vessel under test includes Centimeter Level Augmentation Service (CLAS) corresponding to Quasi-Zenith Satellite System (QZSS) "MICHIBIKI" provided position information and satellite compass provided in an orientation angle sensor. The vessel information acquiring means can monitor, in real time, various data such as the number of rotations of propeller, the number of rotations of the engine, an estimated value of a load of a main engine, a wind direction and a wind speed.

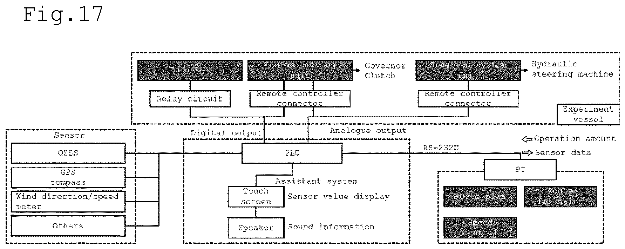

Fig. 17 is a configuration diagram of a ship's hull control system.

The vessel under test includes a PC (personal computer) for control and a PLC (Programmable Logic Controller), a control system mainly composed of the reliable and extendable PLC is constructed to make it possible to control the experiment vessel from the PC, and the PC can monitor and operate a hydraulic steering system and a main engine remote operation system.

The PC can receive, via the PLC, the reception of information acquired by the vessel information acquiring means, and the rudder, the main engine governor (corresponding to commanded value of the engine telegraph), the clutch and the thruster all of which are used for common berthing operation.

It is possible to monitor information acquired by the vessel information acquiring means from the display means (touch screen) connected to the PLC. Further, the automatic guiding system includes function to guide a distance from the pier, wind conditions and current control status by sound output from a speaker connected to the display means.

Further, during automatic control by the PC, a ship operator can shut off communication from the PC any time and switch the operation to manual sailing operation, and the system has emergency stopping mechanism which can be actuated from a touch screen as safety measure.

To develop the system, if it is possible to check the operation of an actual program on land without connecting with the actual mechanism during development of a control program for security reasons, it is possible to previously validate performance and existence or non-existence of defect of the entire control program including a communication part other than algorithm. Hence, a communication emulator of the PLC having function to simulate ship motion was formed. This communication emulator includes function to simulate wind conditions and predict movement based on the steering movement mathematical model, and it is possible to communicate and control with the same protocol as serial communication between the PLC and the PC which is used in the actual vessel.

It is possible to simulate variation of the wind conditions based on a wind direction and a wind speed which are set as average values in accordance with the normal distribution and the Weibull distribution. Further, wave and tidal stream are not handled in this experiment because they do not have influence on the berthing operation in a target area.

In design of algorithm, a mathematical model of ship motion based on the MMG model as shown in the following equation (6) was used to evaluate influence or response and disturbance at the time of low speed sailing, and especially wind.

[Equation 6]

$$(m + m_x)\,\dot{u} - m(vr + x_G r^2) = X \\ (m + m_y)\,\dot{v} + mx_G \dot{r} + (m + m_x)ur = Y \\ (I_{zz} + mx_G^2 + J_{zz})\dot{r} + mx_G(\dot{v} + ur) = N \qquad \cdots (6)$$

Wherein, m represents mass of a vessel, $I_{zz}$ represents inertia moment of yawing concerning gravity center of the ship's hull, $m_x$, $m_y$, $J_{zz}$ respectively represent added mass and added moment of inertia in the longitudinal direction and lateral direction, and $x_G$ represents a position of gravity center in an x-axial direction. Here, u, v, r respectively represent the longitudinal direction speed, the lateral speed, and the rate of turn in the center of the ship's hull, and time derivative of a speed component is expressed by dot. Here, X, Y, Z respectively represent external force in a direction of longitudinal direction (surge), lateral direction (sway), and yaw direction acting on the vessel, and they are expressed by the following equation (7).

[Equation 7]

$$X = X_H + X_P + X_R + X_A + X_S \\ Y = Y_H + Y_P + Y_R + Y_A + Y_S \\ N = N_H + N_P + N_R + N_A + N_S \qquad \cdots (7)$$

Wherein,

$X_H$, $Y_H$, $N_H$: hydrodynamic forces acting on the ship's hull,
$X_P$, $Y_P$, $N_P$: hydrodynamic forces caused by the propeller
$X_R$, $Y_R$, $N_R$: hydrodynamic forces caused by the rudder
$X_A$, $Y_A$, $N_A$: wind loads acting on ship's hull, and
$X_S$, $Y_S$, $N_S$: hydrodynamic forces caused by the bow thruster

To calculate hydrodynamic force of the ship's hull, there was used a model of the following equation (8) capable of expressing hydrodynamic forces in the lateral direction and turning direction with a large drift angle at the time of low speed which required a small number of coefficients by reference to document "Y. Yoshimura et al.: UNIFIED MATHEMATICAL MODEL FOR OCEAN AND HARBOUR MANOEUVRING, Proceedings of MARSIM 2009, 2009.".

[Equation 8]

$$X_H = \frac{1}{2}\rho Ld \left[ \{X_{0F}{}' + (X_{0A}{}' - X_{0F}{}')|\beta|/\pi\}uU \\ + (m_y{}' + X_{vr}{}')Lvr \right]$$

$$Y_H = \frac{1}{2}\rho Ld \left[ Y_v{}'v|u| + Y_r{}'Lur \\ -\frac{C_D}{L}\int_{-\frac{L}{2}}^{\frac{L}{2}}|v + C_{rY}rx|(v + C_{rY}rx)dx \right]$$

$$N_H = \frac{1}{2}\rho L^2 d \left[ N_v{}'vu + N_r{}'L \cdot |u|r \\ -\frac{C_D}{L^2}\int_{-\frac{L}{2}}^{\frac{L}{2}}|v + C_{rN}rx|(v + C_{rN}rx)xdx \right] \qquad \cdots (8)$$

Here, $X_{0F}{}'$ represents the resistance coefficient at the time of ahead, $X_{0A}{}'$ represents the resistance coefficient at the time of astern, $X_{vr}{}'$, $Y_v{}'$, $Y_r{}'$, $N_v{}'$, $N_r{}'$ represent hydrodynamic derivatives, and $C_D$, $C_{rY}$, $C_{rN}$ represent correction coefficients concerning Cross-flow drag.

The added mass was determined by multiple regression equation of the Motora chart, resistance coefficients at the time of ahead and astern were determined by the speed test result when an actual vessel idling sails and a last water tank experiment result.

The KT-J curve used for calculating propeller thrust force was obtained based on database which estimated performance estimation approximation of MAU-type propeller and characteristics of second to fourth quadrant of B-Series propeller.

Concerning the number of rotations of propeller, control by switching of the clutch in an idling state of the main engine in the vicinity of the berthing position was estimated, 3.1, 0, -3.1 [rps] correspond to ahead, neutral and astern of the clutch from measurement of the actual vessel, and time delay of switching of the clutch was ignored.

Calculation when the propeller rotated reversely could handle generated imbalance fluid force, and a model capable of taking fluid force of rudder at the time of reverse rotation into account was introduced.

According to calculation of the thrust force when the clutch was set to neutral, the number of rotations of propeller became zero, calculation of ahead constant number J was omitted, and concerning propeller thrust force $T = X_p/(1-t_P)$ was zero, and calculation was carried out under a condition that $u_R=(1-W_R)u$ based on definition of longitudinal direction effective inflow speed $u_R$ into rudder.

Variation of rudder angle $\delta$ was primary delay system with respect to commanded rudder angle $\delta^*$. Wind loads coefficient was determined using a technique which could be estimated by a small input parameter.

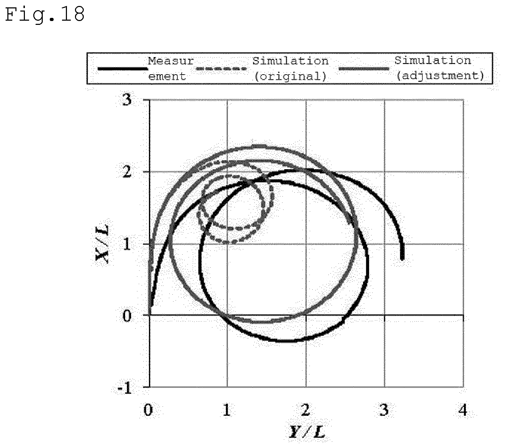

Fig. 18 is a diagram showing comparison between a measurement result of a turning test and an adjustment/simulation result.

To identify hydrodynamic force differential coefficient and the like, turning tests of rudder angles 20°, 40°, and actual vessel measurement such as a Z test of ±10°, ±20° were carried out with a focus on the number of rotations of propeller 3.1 [rps] of the idling state.

Next, simulation was carried out using the equation (6) by reference to various kinds of estimation equations and database, and coefficients were adjusted while comparing with the measurement values of the actual vessel experiment. Identification results of this procedure are shown in Fig. 18 and the following Table 3. In Fig. 18, the rudder angle is 45°, average true wind speed is 2.08 [m/s], and average true wind direction is 348.4 [deg]. Since influence of tidal stream which cannot be measured by the adjusting operation is removed, there exists a difference in ship trajectory, but it can be found that speed components u, v, r substantially replicate movement of the actual vessel.

[Table 3]

|  | Ahead | Astern |
|---|---|---|
| $m'_x$ | 0.01897 | |
| $m'_y + X'_{vr}$ | 0.2470 | 0.1647 |
| $Y'_v$ | -1.232 | -0.5547 |
| $Y'_r$ | 0.1058 | 0.04759 |
| $N'_v$ | -0.07905 | -0.09486 |
| $N'_r$ | -0.1343 | -0.0614 |
| $C_D$ | 0.1853 | 0.08340 |
| $C_{rY}$ | 1.413 | 0.6362 |
| $C_{rN}$ | 3.337 | 1.525 |

The algorithm was developed using the constructed mathematical model of ship motion, and this was applied to the experiment vessel.

Validation of the automatic berthing by the automatic guiding system using the experiment vessel was carried out using two settings, i.e., "virtual pier" based on position coordinate on a point separated from the floating pier by about 30 m, and "actual pier" in which actual floating pier is regarded as a target. Between berthing operation of these two conditions, there is no difference other than berthing objective point.

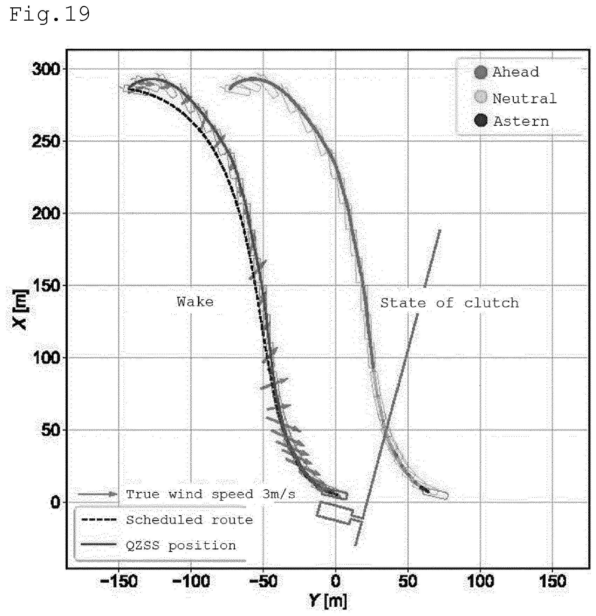

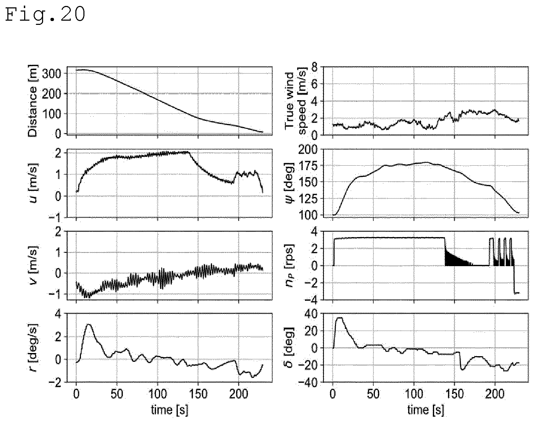

Fig. 19 is a diagram showing an experiment result of automatic berthing operation at a virtual pier, and Fig. 20 is a diagram showing measurement values acquired by the vessel information acquiring means in experiment of the automatic berthing operation at the virtual pier.

In Fig. 19, actual ship trajectory, ship's hull position and true wind direction wind speed at that time are illustrated on the left side at intervals of ten seconds, and states of the clutch corresponding to ship trajectory are expressed by means of color on the right side.

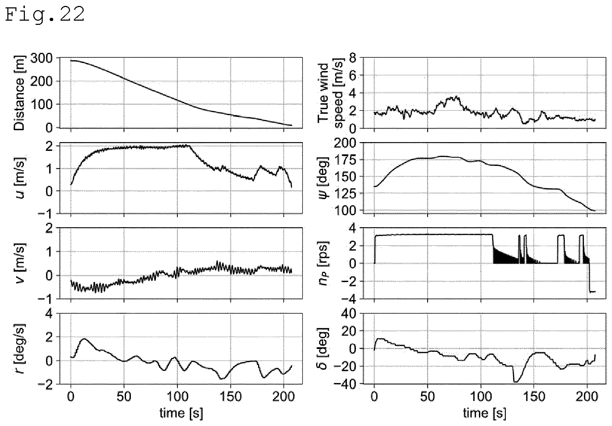

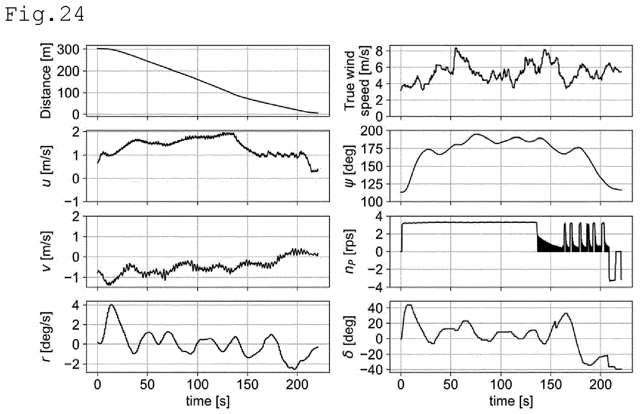

Here, "Distance" in Fig. 20 expresses a straight distance at a berthing target position and positions of quasi-zenith satellites of the own vessel (this is the same also in later-described Figs. 22 and 24). The ship trajectory shows that deviation from the route is reduced as a distance from the pier becomes shorter. On the other hand, it can be found that the clutch is brought into the ahead state intermittently during the turning mode, and the heading angle is adjusted.

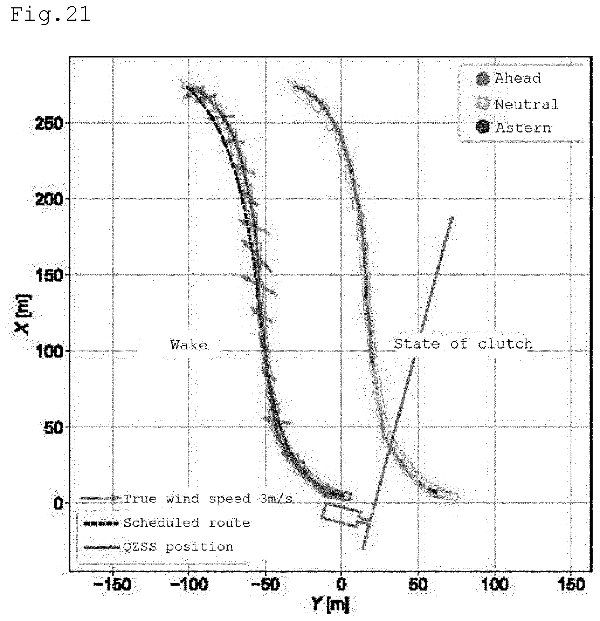

Fig. 21 is a diagram showing an experiment result of automatic berthing operation at an actual pier, and Fig. 22 is a diagram showing measurement values acquired by the vessel information acquiring means in experiment of the automatic berthing operation at the actual pier.

Unlike when the experiment of the virtual pier is carried out, a wind direction is almost opposite, but the route following performance is changelessly excellent.

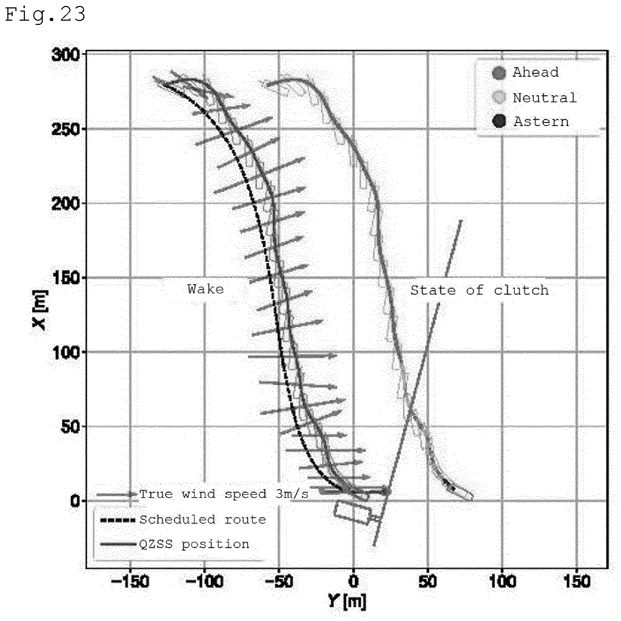

Fig. 23 is a diagram showing an experiment result of automatic berthing operation at the virtual pier when a wind is strong, and Fig. 24 is a diagram showing measurement values acquired by the vessel information acquiring means in experiment of the automatic berthing operation at the virtual pier when a wind is strong.

To check the wind-following performance, experiment of the berthing operation to the virtual pier was carried out under strong wind. Average true wind speed was 5.34 [m/s], and exceeds 8.0 [m/s] in some cases. Under such status, although deviation from a route became large, deviation was not increased even after neutral navigation mode, and the vessel docked the pier. It is considered that a deviation amount of the route is compensated by increasing the steering/rudder angle.

[Example 2]

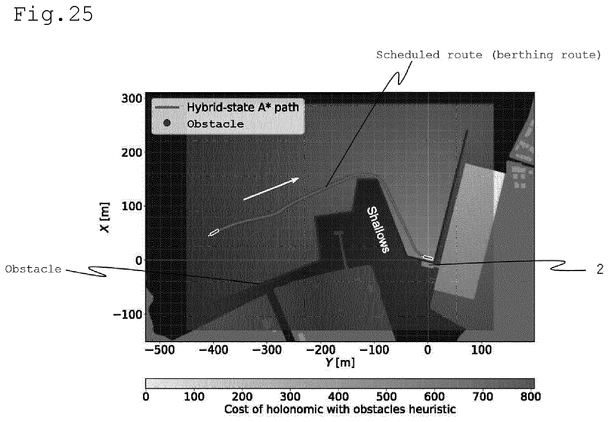

To verify the production of the berthing route/course using the hybrid-state A* in the second embodiment, as experiment sea area, calculation was carried out for sea area around Innoshima. Fig. 25 is a diagram showing a scheduled route/course to the berthing which is produced using the hybrid-state A*. In this example, a route for avoiding an obstacle composed of points is line by lines. In this calculation example, as the obstacle, points are placed to surround shallow waters near the land and pier.

The map superimposed on a graphic map expresses a cost map calculated using the dynamic programming, and the map shows that as color is denser, the cost is larger as shown with numeric values 0 to 800 at a lower portion.

As closer to the pier 2, the cost becomes smaller, but at a position where an obstacle is sandwiched, even if the pier 2 and the straight distance are smaller, it is necessary to bypass the obstacle until the pier 2, therefore, it can be found that the cost is prone to increase. It can be found that the key scheduled route/course is connected to the pier 2 to bypass a certain region of breakwaters or shallow waters from an initial position, and a target berthing route/course can be obtained. If the obtained berthing route/course is observed in detail, an area from the start position to a north side of the shallow waters is a route obtained by node search of the hybrid-state A* and thereafter, a route composed of an arc and a straight line forming an area to the pier 2 is a Reeds-Shepp path. The total number of nodes expanded by searching of the hybrid-state A* was 874.

The experiment vessel "Shinpo" used in the embodiment 1 is provided with some sensors for monitoring surrounding status. Among them, LiDAR can detect an obstacle from a distance of 200 to 300 [m] depending upon a product. In Shinpo, a LiDAR (VLP-32C produced by Velodyne Lidar) is installed on the deck, and this records measurement data at the time of experiment. Using those measurement data, the route for controlling berthing was produced. Data used this time was obtained in the following manner, i.e., from data measured by LiDAR at the time of berthing operation of Shinpo, one frame of data is pulled out, points within 20 [m] from the sensor and a value of intensity of the LiDAR of each point clouds which is equal to or less than 25 is removed as noise, and this data was used. Weather when the measurement was carried out was fine.

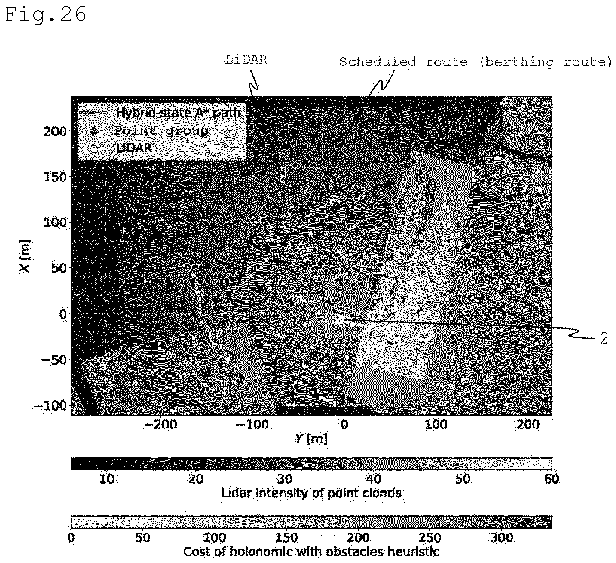

Fig. 26 is a diagram showing an example of calculation of a berthing route/course using a point clouds measured by the LiDAR. In the example shown in Fig. 26, a route is calculated from a position at the time of measurement. In this sea area, there is no obstacle which blocks course if approaching the pier 2. Therefore, the calculated and obtained route is composed of only Reed-Shepp path, bit there is a possibility that a different result comes out depending upon more complicated status, and reflection strength of obstacle.

In detection of obstacle using the LiDAR, a point cloud cannot be obtained as it happens at some time. In the example shown in Fig. 26, a tip end of the breakwater existing from a central portion to a left side in the screen is not detected. In an actual case, in the case of such a portion which is failed to be caught, since a measurement distance becomes short, a possibility that it can be detected is increased. As remedy, it is possible to use a LiDAR whose number of channels is higher, and it is preferable that last several frame data is combined and used, measurement temporarily compensates data of leaked portion and detection probability or precision are enhanced.

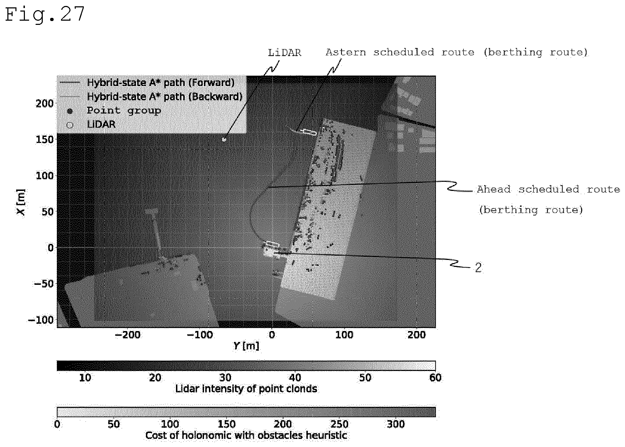

As an example in which collision against an obstacle is avoided based on sensor data of the LiDAR to found a route to the pier, Fig. 27 is a diagram showing an example of calculation of a route in which a position a ship's hull is intentionally changed from a position measured by the LiDAR. Attention must be paid to a point where a measurement position of the LiDAR and an initial position of the ship's hull are different from each other, and there is a possibility that an ancually different point cloud is obtained.

As shown in Fig. 27, the following result could be obtained, i.e., bow was swing slightly from a state where heading is moving toward quay wall on a north side of the pier 2 and then, the vessel astern to the route shown with lines, the heading is directed to the pier 2, and the vessel ahead and followed and reached the pier 2. The total number of nodes searched at this time was 121.

By utilizing the sensor data of the LiDAR in this manner, it is possible to calculate a route which avoids an obstacle even under a state where data of obstacle is not previously given. On the other hand, since a general LiDAR cannot obtain information of water depth, it is necessary to separately prepare a region where the vessel can sail. Since data of the LiDAR coincides with an obstacle in position of the point cloud, in order to calculate a route having leeway for avoiding collision, it is preferable to make effort to expand a rectangular scope expressing the own vessel used for determination of collision.

Although a route was calculated for one frame data this time, but as timing for actually producing a scheduled route/course, there are a grovel path planning in which a global route is first determined, and a local path planning in which a route is produced on the moment for local obstacle data like this time. When it is utilized as the local path planning, some leeway is given so that route following control catches up when frequency of renewal of the scheduled route/course or a scheduled route/course is changed before or after the renewal.

[Example 3]

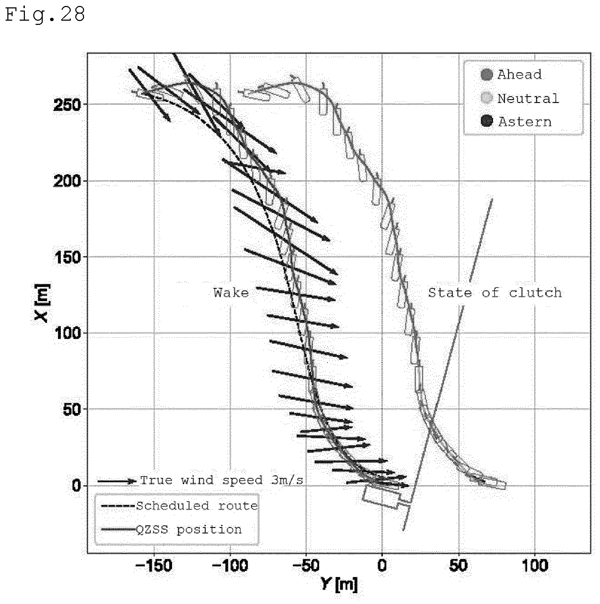

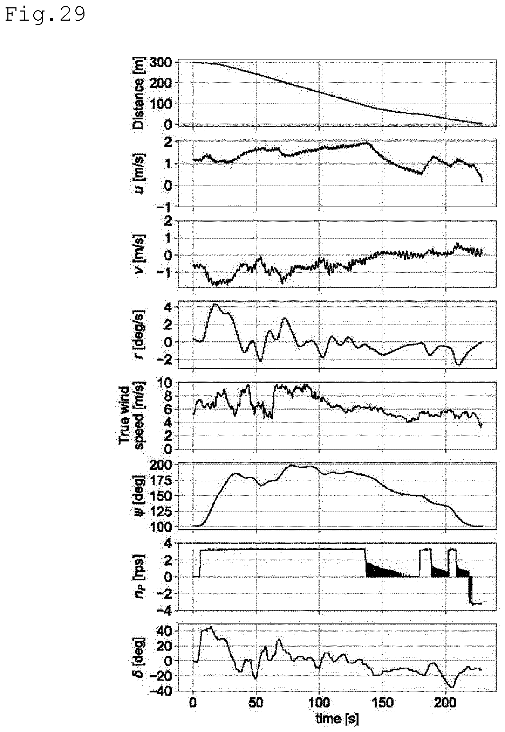

To verify an effect of route following control in which feedforward control of wind disturbance compensation if the third embodiment was incorporated, actual vessel test using the experiment vessel "Shinpo" was carried out. This example was conducted in sea area (Innoshima marina) around Innoshima Onomichi-shi Hiroshima prefecture like the example 1. Like the example 1, a route is automatically produced to avoid the shallow waters existing amount the pier 2, and the vessel follows the route. In this experiment, the vessel docks the pier by starboard-side to the float pier. Figs. 28 and 29 are diagrams showing experiment results of wind disturbance compensation type route following control of the present invention, wherein Fig. 28 shows an actual vessel test result of the berthing control by pure pursuit and the HCS using feedback control, and Fig. 29 shows an actual measurement value of a state shown in Fig. 28.

In this experiment, as shown in Fig. 29, average 6.38 [m/s] true wind speed blows, deviation which is first generated is gradually reduced, and the deviation is eliminated almost at all at a location separated away from the pier 2 by 50 [m], i.e., before the turning mode where control prevision is required.

As compared with the example 1 (Figs. 23, 24) where there is no wind disturbance compensation, an effect of speed control by this example can be found. In this example, it can be found that switching of the clutch is improved and variation in the number of rotations of propeller is minimized. In this example, a final heading is sufficiently close to orientation (104 [deg]) of the pier 2. If a mooring operation thereafter is considered, it is important that a stern is brought close to the pier 2. Therefore, in that sense also, an effect that the speed control is improved and control precision of the terminal end state is enhanced.

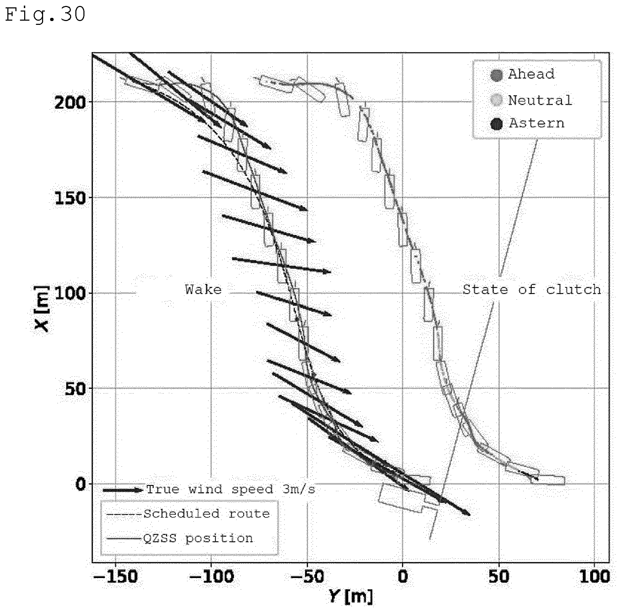

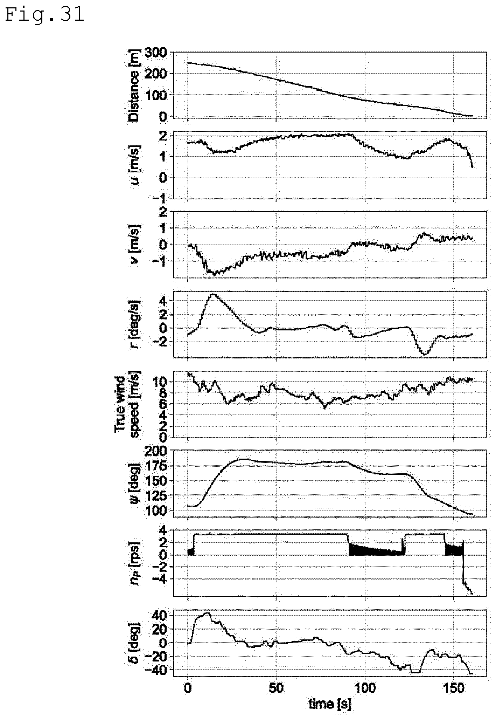

To verify the performance of wind disturbance compensation control in the third embodiment, an experiment was carried out under a stronger wind. Results thereof will be shown in Figs. 30 and 31. Fig. 30 shows an actual vessel test result of the berthing control by pure pursuit and a HCS which are feedback controlled under a strong wind, and Fig. 31 shows an actual measurement value in a state shown in Fig. 30.

In this experiment, berthing is controlled in a state where average true wind speed is 8.86 [m/s], i.e., extremely strong wind is blowing. It can be confirmed that immediately after the control is started where true wind speed is about 12 [m/s] at maximum, the vessel is initially influenced toward east, the vessel is largely turned around soon, and route deviation is eliminated at extremely early stage. Control of clutch which is improved in the turning mode is also ideal control in which the number of switching operations is small.

[INDUSTRIAL APPLICABILITY]

According to the present invention, a vessel can precisely follow a scheduled route/course even under disturbance. Therefore, the invention can assist a sailing operation which required high level technique such as berthing, and the invention can automatize the operation. Further, even in outside of harbor other than berthing, the vessel can smoothly follow a scheduled route/course formed from a curved path. It is anticipated that a small vessel receives larger influence of disturbance received when the vessel sails at low speed, but the present invention exert effects on such small vessel, and the invention is effective also for vessels of medium and large size.

[DESCRIPTION OF SYMBOLS]

10          scheduled route/course producing means
20          vessel information acquiring means

| 30 | pure pursuit calculating means |
| 40 | automatic sailing calculating means |
| 50 | control means |
| 60 | automatic sailing device |
| 61 | speed control means |
| 70 | display means |
| S1, S14 | scheduled route/course producing process |
| S3, S11, S15 | vessel information acquiring process |
| S4, S21 | pure pursuit calculation process |
| S5, S22 | automatic sailing calculation process |
| S6, S16 | controlling process |

**Claims**

1. An automatic guiding method of a vessel using an automatic sailing device which at least automatically steers of the vessel underway, comprising: a scheduled route/course producing process for acquiring or calculating a scheduled route/course; a vessel information acquiring process for acquire a position of the vessel and a heading; a pure pursuit calculation process for calculating a target point or an orientation of the target point which satisfies a predetermined condition on the scheduled route/course in an ongoing direction of the vessel based on the position and a heading; an automatic sailing calculation process for calculating a steering/rudder angle of the vessel based on the target point or the orientation and the position or the heading; and a controlling process for controlling the automatic sailing device based on the calculated steering/rudder angle.

2. The automatic guiding method of a vessel according to clam 1, wherein a speed of the vessel is acquired in the vessel information acquiring process, and calculation is carried out using the speed in the pure pursuit calculation process and the automatic sailing calculation process.

3. The automatic guiding method of a vessel according to claim 2, wherein an input arrival position of the vessel of an arrival point and an arrival orientation are acquired in the scheduled route/course producing process, and the scheduled route/course capable of reaching the arrival position and securing the arrival orientation is calculated using the position, the heading and the speed acquired by the vessel information acquiring process.

4. The automatic guiding method of a vessel according to clam 2 or 3, wherein in the scheduled route/course producing process, sea area information is acquired, and the sea area information where the vessel cannot sail is added and the scheduled route/course is calculated.

5. The automatic guiding method of a vessel according to any one of clams 2 to 4, wherein in the scheduled route/course producing process, further includes a control point adjusting process for adjusting a control point which is set for changing the scheduled route/course formed from a curved path, and the scheduled route/course is produced based on the adjusted control point.

6. The automatic guiding method of a vessel according to any one of clams 2 to 5, wherein in the scheduled route/course producing process, the scheduled route/course is divided into a plurality of divided routes in which it is supposed that the control mode is switched.

7. The automatic guiding method of a vessel according to any one of clams 2 to 6, wherein the speed of the vessel sailing through the scheduled route/course is calculated in the automatic sailing calculation process, and speed control means including a clutch of the automatic sailing device is controlled based on the calculated speed in the controlling process.

8. The automatic guiding method of a vessel according to claim 6 which cites claim 3 or 4, or according to claim 7 which cites claim 6 which cites claim 3 or 4, wherein in the scheduled route/course producing process, when the speed of the vessel which is preset in the arrival position is zero, produce the scheduled route/course including the divided route having an approaching angle to the arrival position of the vessel becomes equal to a preset angle when a distance between the vessel and the arrival position reaches a preset distance.

9. The automatic guiding method of a vessel according to claim 6 which cites claim 3 or 4, or according to claim 7 which cites claim 6 which cites claim 3 or 4, or according to claim 8, wherein in the scheduled route/course producing process, when the speed of the vessel which is preset in the arrival position is zero and the ongoing direction of the vessel is a preset approaching angle into the arrival position, there is produced the scheduled route/course including the substantially straight divided route which controls speed such that the speed of the vessel becomes zero when a distance between the vessel and the arrival position reaches a position which is shorter than a preset distance.

10. The automatic guiding method of a vessel according to any one of clams 2 to 9, wherein weather and maritime weather information around the vessel is acquired in the vessel information acquiring process, an external force acting on the vessel based on the weather and maritime weather information is added in the automatic sailing calculation process, and the steering/rudder angle and the speed are corrected.

11. The automatic guiding method of a vessel according to clam 10, wherein the external force acting on the vessel by a wind direction and a wind speed acquired as the weather and maritime weather information is obtained, ship motion by the external force is predicted, the steering/rudder angle or the speed which cancels out the ship motion by the external force is derived, and the automatic sailing device is controlled such that disturbance by a wind is compensated.

12. An automatic guiding program of a vessel using an automatic sailing device which at least automatically controls steering of the vessel underway, wherein the program causes a computer to execute the scheduled route/course producing process in accordance with input of a condition, the vessel information acquiring process, the pure pursuit calculation process, the automatic sailing calculation process and the controlling process in the automatic guiding method of a vessel according to any one of claims 1 to 11.

13. An automatic guiding system of a vessel using an automatic sailing device which at least automatically controls steering of the vessel underway, comprising scheduled route/course producing means for acquiring a scheduled route/course or calculating the scheduled route/course, vessel information acquiring means for acquiring a position and a heading of the vessel, a pure pursuit calculating means for calculating a target point or an orientation of the target point which satisfies a predetermined condition on the scheduled route/course in an ongoing direction of the vessel based on the position of the vessel and the heading, an automatic sailing calculating means for calculating a steering/rudder angle of the vessel based on the target point or the orientation and the position or the heading, and control means for controlling the automatic sailing device based on the steering/rudder angle of the vessel.

14. The automatic guiding system of a vessel according to claim 13, wherein a speed of the vessel is acquired in the vessel information acquiring means, and calculation is carried out using the speed in the pure pursuit calculating means and the automatic sailing calculating means.

15. The automatic guiding system of a vessel according to claim 14, wherein an input arrival position of the vessel of an arrival point and an arrival orientation are acquired in the scheduled route/course producing means, and the scheduled route/course capable of reaching the arrival position and securing the arrival orientation is calculated using the position, the heading and the speed acquired by the vessel information acquiring means.

16. The automatic guiding system of a vessel according to claim 14 or 15, wherein in the scheduled route/course producing means, sea area information is acquired, and the sea area information where the vessel cannot sail is added and the scheduled route/course is calculated.

17. The automatic guiding system of a vessel according to any one claims 14 to 16, wherein the scheduled route/course producing means includes a control point adjusting section in which a ship crew member checks and changes a set control point of the scheduled route/course, or an automatic control point adjusting section for automatically adjusting the control point based on vessel information obtained by the vessel information acquiring means, and the scheduled route/course is produced based on the adjusted control point.

18. The automatic guiding system of a vessel according to any one of claims 14 to 17, wherein in the scheduled route/course producing means, the scheduled route/course is divided into a plurality of divided routes which switch modes of the control.

19. The automatic guiding method of a vessel according to any one of claims 14 to 18, wherein the automatic sailing calculating means calculates the speed of the vessel which sails the scheduled route/course, and the control means controls speed control means including a clutch of the automatic sailing device to obtain the calculated speed.

20. The automatic guiding system of a vessel according to claim 18 which cites claim 15 or 16, or according to claim 19 which cites claim 18 which cites claim 15 or 16, wherein in the scheduled route/course producing means, when the speed of the vessel which is preset in the arrival position is zero, produce the scheduled route/course including the divided route having an approaching angle to the arrival position of the vessel becomes equal to a preset angle when a distance between the vessel and the arrival position reaches a preset distance.

21. The automatic guiding system of a vessel according to claim 18 which cites claim 15 or 16, or according to claim 19 which cites claim 18 which cites claim 15 or 16, or according to claim 20, wherein in the scheduled route/course producing means, when the speed of the vessel which is preset in the arrival position is zero and the ongoing direction of the vessel is a preset approaching angle into the arrival position, there is produced the scheduled route/course including the substantially straight divided route which controls speed such that the speed of the vessel becomes zero when a distance between the vessel and the arrival position reaches a position which is shorter than a preset distance.

22. The automatic guiding system of a vessel according to any one of claims 14 to 21, wherein the vessel information acquiring means acquires weather and maritime weather information around the vessel, an external force acting on the vessel based on the weather and maritime weather information is added in the automatic sailing calculating means, and the steering/rudder angle and the speed are corrected.

23. The automatic guiding system of a vessel according to claim 22, wherein the external force acting on the vessel by a wind direction and a wind speed acquired as the weather and maritime weather information is obtained, ship motion by the external force is predicted, the steering/rudder angle or the speed which cancels out the ship motion by the external force is derived, and the automatic sailing device is controlled such that disturbance by a wind is compensated.

24. The automatic guiding system of a vessel according to any one of claims 13 to 23, further comprising display means which displays at least any one of the scheduled routes/courses, a position of the vessel, the heading, the target point and an orientation of the target point.

25. A vessel comprising an automatic guiding system of the vessel according to any one of claims 13 to 24.

Fig.1

```
┌─────────────────────────────────────────────────────────────┐
│  ┌──────────────────────┐ 10    ┌──────────────────────┐ 30  │
│  │ Scheduled route      │       │ Pure pursuit         │     │
│  │ producing means      │       │ calculating means    │     │
│  └──────────────────────┘       └──────────────────────┘     │
│                          20                             40    │
│  ┌──────────────────────┐       ┌──────────────────────┐     │
│  │ Vessel information   │       │ Automatic sailing    │     │
│  │ acquiring means      │       │ calculating means    │     │
│  └──────────────────────┘       └──────────────────────┘     │
│                                                         50    │           70
│                                 ┌──────────────────────┐     │    ┌──────────────┐
│                                 │    Control means     │─────┼────│   Display    │
│                                 └──────────────────────┘     │    │    means     │
│                                                         60    │    └──────────────┘
│                                 ┌──────────────────────┐     │
│                                 │ Automatic sailing    │     │
│                                 │ device          61   │     │
│                                 │  ┌─────────────────┐ │     │
│                                 │  │ Speed control   │ │     │
│                                 │  │    means        │ │     │
│                                 │  └─────────────────┘ │     │
│                                 └──────────────────────┘     │
└─────────────────────────────────────────────────────────────┘
```

Fig.2

```
        ┌─────────────────────┐
        │    Start control    │
        └─────────────────────┘
                   │
                   ▼            S1
        ┌─────────────────────┐
        │   Input scheduled   │
        │        route        │
        └─────────────────────┘
                   │
                   ▼            S2
        ┌─────────────────────┐
        │    Start sailing    │
        └─────────────────────┘
                   │
                   ▼            S3
        ┌───────────────────────┐
        │    Acquire vessel     │◄──────────┐
         \     information       \          │
          └─────────────────────┘           │
                   │                         │
                   ▼            S4           │
        ┌─┬───────────────────┬─┐           │
        │ │   Pure  pursuit   │ │           │
        │ │    calculate      │ │           │
        └─┴───────────────────┴─┘           │
                   │                         │
                   ▼            S5           │
        ┌─┬───────────────────┬─┐           │
        │ │ Automatic sailing │ │           │
        │ │  Sail calculate   │ │           │
        └─┴───────────────────┴─┘           │
                   │                         │
                   ▼            S6           │
        ┌─────────────────────┐             │
        │      Steering       │             │
        └─────────────────────┘             │
                   │                         │
                   ▼            S7           │
              ╱─────────────╲       NO       │
        ┌────╱ Is control    ╲──────────────┘
        ╲   ╲ termination     ╱
         ╲   ╲signal received?╱
          ╲───────────────────╱
                   │ YES
                   ▼
        ┌─────────────────────┐
        │   Terminal control  │
        └─────────────────────┘
```

Fig.3

Fig.4

N

Wind

Tidal
stream

Unstable

Constant

Scheduled route

Actual wake

Scheduled route

Actual wake

(a)

(b)

Fig. 5

Average rotational speed of main engine :
757[rpm], Average true wind speed 6.0[m/s],
Average wind direction 272[deg]

(a)

Average rotational speed of main engine :
757[rpm], Average true wind speed 6.29[m/s],
Average wind direction 301[deg]

(b)

Fig.6

```
        ┌─────────────────────────┐
        │  Start berthing control │
        └─────────────────────────┘
                    │
                    ▼              S11
         ╱────────────────────╲
        ╱       Acquire         ╲
       ╱        vessel           ╲
      ╱       information         ╲
     ╱────────────────────────────╲
                    │
                    ▼              S12
        ┌─────────────────────────┐
        │ Input berthing position │
        │ coordinate and berthing │
        │    orientation angle    │
        └─────────────────────────┘
                    │
                    ▼              S13
        ┌─────────────────────────┐
        │      Start sailing      │
        └─────────────────────────┘
                    │
                    ▼              S14
        ┌──┬──────────────────┬──┐
        │  │   Produce route  │  │
        └──┴──────────────────┴──┘
                    │
                    ▼              S15
         ╱────────────────────╲
        ╱       Acquire         ╲ ◄─────┐
       ╱        vessel           ╲      │
      ╱       information         ╲     │
     ╱────────────────────────────╲    │
                    │                   │
                    ▼              S16  │
        ┌──┬──────────────────┬──┐      │
        │  │ Control automatic│  │      │
        │  │ berthing, steering│ │      │
        │  │   and clutch     │  │      │
        └──┴──────────────────┴──┘      │
                    │                   │
                    ▼      S17          │
              ╱──────────╲    NO        │
             ╱ Is vessel   ╲────────────┘
            ╱ pier docked ?  ╲
             ╲              ╱
              ╲──────────╱
                    │ YES
                    ▼
        ┌─────────────────────────┐
        │  Terminate automatic    │
        │   berthing control      │
        └─────────────────────────┘
```

Fig.7

Fig.8

Fig.9

# Fig.10

Start berthing control

berthing route information

Pure pursuit calculate — S21

Automatic sailing Sail calculate — S22

Steering — S23

Acquire vessel information — S15

## Clutch Control

$D_1 < D_{berth}$ — S24 — YES — Route following mode — Clutch : Ahead

NO

### Neutral navigation mode

$D_2 < D_{berth} < D_1$ — S25 — YES — $u > u_1$ — S26 — YES — Clutch : Neutral

NO — NO — Clutch : Ahead

### Turning mode

$D_3 < D_{berth} < D_2$ — S27 — YES — $u > u_2$ — S28 — YES — Clutch : Neutral

NO — NO

$\alpha - \psi < 0$ (starboard-side) $\alpha - \psi > 0$ (port-side) — S29 — YES — Clutch : Ahead

NO

$D_{berth} > D_F$ AND $|\alpha - \psi| > 5$ — S30 — YES — Clutch : Ahead

NO

$u < u_3$ — S31 — YES — Clutch : Ahead

NO — Clutch : Neutral

### Stop mode

$D_{berth} < D_3$ — YES — $x_1 < x_{berth}$ AND $u > 0.5$ — S32 — YES — Clutch : Astern

NO

$x_2 < x_{berth}$ AND $u > 0.1$ — S33 — YES — Clutch : Astern

NO

$x_{berth} < 0$ AND $u < 0$ — S34 — YES — Clutch : Ahead

NO — Clutch : Neutral

Fig.11

Fig.12

(a)

(b)

Fig.13

Fig.14

Wake

Scheduled route

Deviation

Wind

Fig.15

Fig.16

Fig.17

Fig.18

Fig.19

Fig.20

Fig.21

Fig.22

Fig.23

Fig.24

Fig.25

Fig.26

Fig.27

LiDAR    Astern scheduled route (berthing route)

Ahead scheduled route
(berthing route)

2

Legend:
— Hybrid-state A* path (Forward)
— Hybrid-state A* path (Backward)
● Point group
○ LiDAR

Lidar intensity of point clonds

Cost of holonomic with obstacles heuristic

Fig.28

Fig.29

Fig.30

Fig.31

## INTERNATIONAL SEARCH REPORT

| | International application No. |
|---|---|
| | PCT/JP2021/018445 |

**A. CLASSIFICATION OF SUBJECT MATTER**
B63H 25/04(2006.01)i
FI: B63H25/04 D

According to International Patent Classification (IPC) or to both national classification and IPC

**B. FIELDS SEARCHED**

Minimum documentation searched (classification system followed by classification symbols)
B63H25/04

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | KR 10-2005559 B1 (SEADRONIX CORP.) 07 August 2019 (2019-08-07) paragraphs [0015]-[0269], fig. 1-37 | 1-4, 7, 10-16, 19, 22-25 |
| Y | paragraphs [0015]-[0269], fig. 1-37 | 5-12, 17-25 |
| Y | CN 110779526 A (NINGBO HAISHANGXIAN INFORMATION TECHNOLOGY CO., LTD.) 11 February 2020 (2020-02-11) paragraphs [0048]-[0194], fig. 1-7 | 5-12, 17-25 |
| Y | 平田宏一，宮崎恵子，齊藤詠子，小型船舶の運航支援のための着桟操作の分析，交通・物流部門大会講演論文集, 04 December 2018, 27th, DOI: 10.1299/jsmetld.2018.27.1019, ISSN: 2424-3175(online), in particular, "3. Measurement result at the time of berthing", (HIRATA, Koichi, MIYAZAKI, Keiko, SAITO, Eiko, "Analysis of Reaching Pier Operation for Support System of Small Vessel", The Proceedings of the Transportation and Logistics Conference) | 6-12, 18-25 |

☒ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 July 2021 (07.07.2021) | 20 July 2021 (20.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2021/018445

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2019-94045 A (BRUNSWICK CORPORATION) 20 June 2019 (2019-06-20) paragraphs [0011]-[0072], fig. 1-9, page 24 | 8-12, 20-25 |
| P, X | SAWADA, Ryohei, HIRATA, Koichi, KITAGAWA, Yasushi, SAITO, Eiko, UENO, Michio, TANIZAWA, Katsuji, FUKUTO, Junji, "Path following algorithm application to automatic berthing control", Journal of Marine Science and Technology, 10 August 2020, vol. 26, pp. 541-554, DOI: 10.1007/s00773-020-00758-x, pp. 543-554 | 1-25 |
| P, X | 澤田涼平, 平田宏一, 北川泰士, 齊藤詠子, 上野道雄, 宮崎恵子, 谷澤克治, 福戸淳司, 経路追従制御による自動着桟操船システムの開発, 日本船舶海洋工学会講演会論文集, 18 May 2020, no. 30, pp. 43-49, ISSN 2185-1840, pp. 44-48, (SAWADA, Ryohei, HIRATA, Koichi, KITAGAWA, Yasushi, SAITO, Eiko, UENO, Michio, MIYAZAKI, Keiko, TANIZAWA, Katsuji, FUKUTO, Junji, "Path Following Algorithm Application to Automatic Berthing System", Conference Proceedings. Japan Society of Naval Architects and Ocean Engineers) | 1-25 |
| A | FOSSEN, Thor I., "10 Guidance Systems, HANDBOOK OF MARINE CRAFT HYDRODYNAMICS AND MOTION CONTROL", First Edition, John Wiley & Sons Ltd., 2011, pp. 241-284, ISBN 978-1-119-99149-6, entire text entire chart | 1-25 |
| A | STENERSON, Thomas, "Guidance System for Autonomous Surface Vehicles", Norwegian University of Science and Technology, 2015, pp. 1-77, entire text, all drawings | 1-25 |

Form PCT/ISA/210 (continuation of second sheet) (January 2015)

**INTERNATIONAL SEARCH REPORT**

Information on patent family members

| International application No. |
| --- |
| PCT/JP2021/018445 |

| Patent Documents referred in the Report | Publication Date | Patent Family | Publication Date |
| --- | --- | --- | --- |
| KR 10-2005559 B1 | 07 Aug. 2019 | US 2020/0074239 A1 paragraphs [0038]-[0271], fig. 1-38 WO 2020/050498 A1 | |
| CN 110779526 A | 11 Feb. 2020 | (Family: none) | |
| JP 2019-94045 A | 20 Jun. 2019 | US 2019/0155288 A1 pp. 2-11, fig. 1-9 EP 3486742 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019196103 A
- JP H7242199 A
- JP 2014184846 A
- JP 2011016384 A

**Non-patent literature cited in the description**

- **KITAMURA F. et al.** Estimation of above water structural parameters and wind loads on ships. *Ships and offshore structures,* 2017, 12-8
- **FUMITOSHI KTTAMURA ; MICHIO UENO ; TOSHIFUMI FUJIWARA.** *Kaijou Gijyutu Anzen Kenkyusho Houkoku,* 2009, vol. 9 (3), 207-213
- **Y. YOSHIMURA et al.** UNIFIED MATHEMATICAL MODEL FOR OCEAN AND HARBOUR MANOEUVRING. *Proceedings of MARSIM 2009,* 2009